# EUROPEAN PATENT SPECIFICATION

(11) **EP 4 427 184 B1**
(45) Date of publication and mention of the grant of the patent: **06.05.2026**
(21) Application number: 22809881.0
(22) Date of filing: 02.11.2022
(51) Int. Cl.: G06Q 40/08

(54) **AUTOMATED PARAMETRIC MODULAR SYSTEM OR DIGITAL PLATFORM FOR FORWARD-LOOKING MEASUREMENTS AND RATINGS OF MEASURABLE IMPACTS OF OCCURRING FLOOD EVENTS AND MODULAR AUTOMATED RISK-TRANSFER STRUCTURE PROVIDING AN ADJUSTABLE FLOOD IMPACT COVER AND METHOD THEREOF**
AUTOMATISIERTES PARAMETRISCHES SYSTEM UND METHODE FÜR VORWÄRTSSICHT
ÉVALUATIONS PRÉVISIONNELLES D'IMPACTS MESURABLES D'ÉVÉNEMENTS D'INONDATION SE PRODUISANT ET STRUCTURE DE TRANSFERT DE RISQUE AUTOMATISÉE MODULAIRE FOURNISSANT UNE PROTECTION D'IMPACT D'INONDATION RÉGLABLE ET PROCÉDÉ ASSOCIÉ

(30) Priority: 03.11.2021 CH 0705002021
(43) Date of publication of application: 11.09.2024
(73) Proprietor: Swiss Reinsurance Company Ltd., 8022 Zürich (CH)
(72) Inventor: SUNDERMANN, Lukas, 8037 Zürich (CH)
(74) Representative: Leimgruber, Fabian Alfred Rupert
(86) International application number: PCT/EP2022/080593
(87) International publication number: WO 2023/078956

(56) References cited:
- WO-A1-2006/002566
- US-A1- 2018 075 537
- US-A1- 2018 165 616
- JIANG XIN ET AL: "Rapid and large-scale mapping of flood inundation via integrating spaceborne synthetic aperture radar imagery with unsupervised deep learning", ISPRS JOURNAL OF PHOTOGRAMMETRY AND REMOTE SENSING, AMSTERDAM [U.A.] : ELSEVIER, AMSTERDAM, NL, vol. 178, 9 June 2021 (2021-06-09), pages 36 - 50, XP086710755, ISSN: 0924-2716, [retrieved on 20210609], DOI: 10.1016/J.ISPRSJPRS.2021.05.019

## Description

### Field of the invention

The field of the invention is directed towards automated systems providing parametric flood event impact cover to one or more objects based on forward-looking and/or predictive measurements of occurrences and occurrence rates of measurable physical impacts of catastrophic events, in particular measurably impacting flood events. The measurements related to measurands depending on the physical, location-dependent event strength, location (as geographic area-based, cell-based, event strength line based, or geographic or topographic coordinate based (as latitude and longitude)), and measured time window, in particular to measurable impacts associated with the occurrence of flood events. Further, the invention is directed to automated parametric mitigation or transfer of the measured forward-looking impact to a specific object by an automated risk-transfer or risk-absorption system, where the impact e.g. is measured in units of expected damage rate, percentage or other quantifying and/or measuring units associated with the measured forward-looking impact the specific object. This invention further relates to automated methods and systems for automated location-dependent recognition of flood occurrence probabilities (denoted as flood risks or flood hazards), where flood states are automatically measured or captured, and location-dependent forward-looking probability values for flood hazards are automatically forecasted (e.g. by stochastic structures or machine-learning structures), measured or generated based on the direct measuring link to the physical environment. Finally, the invention relates to digital, modular platforms for automated mitigation of impacted physical damages to physical objects on a certain geographic location and future time window.

### Background of the invention

Today reliable automated flood impact and impact response or mitigation systems are painfully lacking. For many countries, it is hardly possible to do a technically correct flood impact occurrence rating and/or determination based on predictive forward-looking impact measures. A glance at the loss history shows that physical damages and associated losses caused by flood events are equally high or higher than those of other natural catastrophic events as earthquakes, windstorms, or other perils. For many of those other perils various prediction and/or rating and/or early warning systems based on actual measuring parameter values already exist. Large physical part of industrial facilities, industrial power and time are lost by occurring flood events having a physical impact to such objects. Additionally, with the trend of increasing risk-transfer penetration for floods, the insurance and re-insurance industry is affected ever more by hardly to measure and predict flood events causing physical damages and losses. To extend the early warning capabilities and flood damage cover, however, the threat of immense data amounts has to be coped with. One new approach is the present inventive measuring system, inter alia, allowing to extrapolate the actual physical measuring parameters to future time windows and geographic cells.

Further, in many countries, a large number of industrial facilities and homes have a significant and measurably predictable probability (risk) for being impacted by flood events, and reasonably should be covered by flood mitigation and risk-transfer processes. However, many prior art systems are not capable to reliably hedge against the technically difficult to predict perils of flood events, inter alia, due to the prevalence of moral hazard and adverse selection phenomena, for example, in entering risk-transfers for objects most affected by the specific peril of flood. In such cases, traditional risk-transfer is not available. Whereas for other damage risks, risk-transfer systems can be based on the use of the law of large numbers to precisely determine a relatively small premium amount to large numbers of objects in order to cover the occurring damages of the small numbers of impacted objects who have suffered a loss due to the event-based impact to their objects. In flood event covers, typically the numbers of impacted objects is larger than the available number of individuals interested in protecting their property/objects from the peril using risk covers, which means that most prior art insurance systems do not provide risk-transfers to occurring flood events since the probability of operating the system in a sound profit range are regarded as being remote. Additionally, while there are risk-transfer systems that are enabled to provide primary flood risk covers for high value homes, the underwriting and provision of such mitigation processes does not account for many flood risks.

The lack of flood reliably automatable risk mitigation, risk-transfer and risk covering systems can be detrimental to the operation of many industrial facilities at a certain location or detrimental to local homeowners of the geographic cell concerned. Even, in many cases, the responsible may discover only after an occurring event impacting a damage that their standard damage covers, and risk-transfers do not cover damages caused by flooding. It is to be mentioned that flooding can occur due to or in the wake of various physical natural disasters, for example occurring earthquakes, landslides, tsunamis, volcanic eruptions, hurricanes, cyclones, storm surges, glacial melting, or other natural disasters. Furthermore, few risk-transfer systems provide flood damage coverage due to the hazard of flood typically being confined to a few areas. As a result, it is an unacceptable risk due to the inability to spread the risk to a wide enough group of objects in order to technically absorb the potential catastrophic nature of the hazard.

In summary, natural disasters such as floods cause severe damage in various parts of the world. The occurrence of most of such disaster events is difficult, if not impossible, to predict over the long term by prior art measuring systems. Conventional flood mitigation techniques determine, assess and estimate pricing of flood risks using parametric risk-transfer structures so as to mitigate flood risks by gathering information related to base flood elevation data, flood depth by using mitigation devices and survey information. In addition, digital marketplace techniques list online policies that guarantee a pre-agreed payout based on pre-determined parameters in case of a flood hazard. The digital marketplace techniques determine a water-elevation function factoring in high water probability data, leading to saving both risk-transfer providers' and customers' time and cost spent on building, inspection, and damage estimation. Additional mechanisms for assessing flood risks use measured flood levels through detection chambers that assess floods based on a determined flood level measured by air-based pressure measuring devices and/or remote sensing techniques, as e.g. satellite based determination of floods. Further, the measured flood levels are used to automate signaling and triggering of cover for a physical impact, typically measured as loss or damage at the impacted object, for example by a flood damage cover payout.

Other available risk transfer mechanisms capture event data of occurred flood and maps data to a digital map along with data related to risk transfer of portfolio. The portfolio is mapped by geographic area and value so that an exposure and risk to the portfolio induced by a flood event is determined. Yet another mechanism for assessing flood risks by simulating movement of water in case of floods is to determine potential for water damage to surface of a structure. This mechanism provides automated expert advices relating to whether to apply flood risk-transfer/insurance for risk-exposed structure based on simulation of water movement in relation to the structure.

Parametric insurance/cover is a type of risk-transfer that is provided to the individual based on one or more pre-agreed measure (the measuring or triggering "parameter" or "index"). The parametric risk cover is levelled by an adjustable degree or threshold value of a predicted risk measure based on, for example, geographic location, exposure threshold etc. Such values can e.g. be generated using prior art hazard mapping applications such as CatNet. The exemplary, proprietary hazard mapping application CatNet is a global, web-based natural hazard analysis and mapping software-based engine, which enables the user to assess and visualize natural hazard exposure for a certain location in the world. Such prior art data-processing engines, as data-link to the application, typically comprise Application Programming Interface (API) providing access to the proprietary risk modeling structures (as e.g. Cat Server API) or any probabilistic flood modeling techniques.

Based on the degree of risk accessed, a parametric expertise may be determined to tailor a product design. This may involve introducing index definition including double trigger functionalities, quoting, and pricing, combining parametric and indemnity risk-transfer. Further, parametric transfer structures may be determined using natural catastrophe (NatCaT) pricing tool for parametric damage and damage exposure cover. In addition, based on the inventive parametric strucutre, a modular computer-supported platform can be provided that provides an end-to-end solution from automated front-end and underwriting to automated natural catastrophe impact covering, e.g. by automated electronic monetary transfer. The platform may be used as front-end for users, for event tracking, for automated activation or electronic triggering of electronic alarm devices e.g. based on forecasted event progressing, measured and/or forecasted event impact and/or physical damage parameters, maintaining proof of loss, generating automatic claims payment, and sustaining policy administration.

The above-disclosed mechanisms/techniques do not discuss about providing a modular system that determines, assess, and evaluate price risks that arise due to occurrence of floods. In addition, these mechanisms/techniques fail to provide parametric risk transfer structures that facilitate to mitigate the risks associated with occurrence of the floods. There is therefore a need in the art for an improved, automatable system and method for providing a customizable impact cover structure for a flood area risk based on measurable and reliable prediction and assessment of location- and time-window-dependent physical impact damage during the occurrence of flood events.

The prior art document Jiang Xi et al: "Rapid and large-scale mapping of flood inundation via integrating spaceborne synthetic aperture radar imagery with unsupervised deep learning", ISPRS Journal of Photogrammetry and Remote Sensing, Amsterdam, NL, vol. 178, June 2021, pp. 36-50 discloses a so called synthetic aperture radar (SAR) for timely monitoring of flood information as it penetrates the clouds during flood events. SAR satellites with high spatial and temporal resolution is used as a basis for assessing flood risks. To extract flood inundation using SAR a segmentation algorithm is used for automatic flood mapping in near-real-time over vast areas and for all-weather conditions by integrating Sentinel-1 SAR imagery with an unsupervised machine learning approach named Felz-CNN. The algorithm consists of three phases: (i) pixel generation; (ii) convolutional neural network-based featurization; (iii) pixel aggregation. The algorithm allows to identify flood extent with an accuracy of 93% and 94%, respectively. The results are then used for the unsupervised approach for an application of flood mapping. The prior art document WO 2006/002566 A1 discloses a system for automated location-dependent recognition of flood risks, whereas a spatial high resolution grid is based on decentralized measurements of flood risk factors of a specific territory, the system comprising distributed gauging stations to measure river discharge parameters (T) within a grid cell. A correlation-module generates an event-specific averaged probabilistic water depth value (H) for a flood event based on the linked flood risk factors and the river discharge values. Further, a cell arbitrator module acts on at least on grid-based composition module according to the averaged probabilistic water depth values (H). The prior art document US 2018/0165616 A1 discloses a system for water events modeling including flood. The system generates models of water events, and allows to generate analytics of water events based on the models, such as, flood risk assessment, flood determination, and insurance rating. The input data to the system include information, such as, waler events' extent, flooded areas, flood plain, inundated areas, and measurement of water condition, terrain elevation data, land use land cover data, soil conductivity, water gauge measurements, and hydrologic regression equations for cal-culating flows. The inputs further include hydrologic modeling algorithms, hydraulic modeling algorithms, geospatial algorithms, and local or remote data of real-time water conditions acquired through machine services. Finally, the prior art US 2018/0075537 A1 discloses a system for a parametric risk transfer system based on automated location-dependent probabilistic tropical storm impact forecast. Weather measuring parameters of weather events are measured by delocalized distributed weather flow stations and transmitted to a central system. The measured weather measuring parameters comprise wind speed and maximum wind speed within a predefined time frame. A spatial high-resolution grid is generated over a geographical area, and a wind field profile is generated. By triggering an indexed wind field parameter of the wind field profile exceeding a predefined trigger, an output activation signal is generated based on the wind field parameter.

### Summary of the Invention

It is one object of the present invention to provide an automated system and method for reliable forward-looking measurements and ratings of physical impacts of occurring location-dependent catastrophic events, as flood events, to a specific object, and in automated conduct and provision/generation of appropriate covers and/or hedging against the impacted damage to the specific object. It is further an object of this invention to provide a new and better automated system and method for providing a dynamic parametric cover, which does not have the above-mentioned disadvantages of the prior art. In particular, it is an object of the present invention to provide a risk-transfer cover based on an extend of a flooded area. Further it is an object, to generate a pricing measure for a cover based on the chosen limit value (payout cover) and a measured and/or forecasted exposure value (e.g. related to the amount severity and/or extend of flooding to an area). The extent of flooded area is generated by assessing an Area of Interest (AOI) using automated systems such as Synthetic Aperture Radar or Drones and by dividing the area into grid cells. The AOI can e.g. be defined client- or user-specific. Ideally the grid cells cover the entire AOI. Later, with using technology such as SAR, it can e.g. be determined how much of the AOI is flooded (in percent area or number of grid cells)

The size of the grid cells can e.g. be predefined and can be different for different risk-transfer structures and user to be covered. The grid size can, thus, be predefined or automatically negotiated between a user and the inventive system, or it can by automatically and/or dynamically adjusted by the system based on a desired resolution within a selected area. The resolution can also be varied by the system e.g. in dependence to the severity of the impact in a certain area, e.g. the severity of flooding. The resolution can also be increased automatically and/or dynamically at the border of the affected area to achieve a more precise quantitative measure for the actual affected or impacted area.

In particular, these aims are achieved by the inventive flood measuring and trigger system for triggering a dynamic parametric flood impact cover for physical objects being measurably impacted by an occurrence of a flood event by using an adaptive damage-cover structure of an automated electronic damage-cover system based on physical flood event measurements, in particular in that the flood measuring and trigger system comprises a central measuring engine with a predefined data structure for capturing a geographic area to be covered, the data structure at least comprising definable area parameters capturing geographic location and/or geographic extent of said geographic area, in that predefined data structure comprises grid parameters for splitting the geographic area to be covered by the spatial grid with equidistant grid cells of definable size, in that the flood measuring and trigger system comprises flood detection devices and/or flood sensors for measuring an occurrence of a flood event by measuring floodings within grid cells of the spatial grid, wherein flood measuring parameters of the flood detection devices and/or flood sensors are transmitted to the central measuring engine and wherein, based on the transmitted flood measuring parameters, grid cells measured as flooded are contributing to the area measured as affected while grid cells measured as not flooded are not contributing to the area measured as affected, in that the central measuring engine comprises a flood threshold measurand, wherein the flood threshold measurand is selected from a percentage of the geographic area given by the area measured as affected to the geographic area, and in that the central measuring engine comprises an electronic flood trigger for triggering the adaptive damage-cover structure covering physical damages or loss associated with the measured occurrence of the flood event, the occurrence measurably impacting physical objects situated in the affected area and/or grid cells measured as affected, wherein the adaptive damage-cover structure is adapted by the damage-cover system based on the flood threshold measurand providing the dynamic parametric flood impact cover.

In another embodiment of the invention, the grid cells are measured as flooded when each grid cell of the measured affected area is flooded. The grid cells are defined as two dimensional m x n blocks. The m x n blocks can e.g. be of approx. 8.72 * 10-5 radian or 0.005x0.005 deg allowing a good resolution of flood measurements. Flood determination per grid cell can e.g. be binary at the centroid. However, it can also be determined dependent on the flood depth, i.e. more refined.

The grid cells measured as flooded can e.g. be determined using an artificial intelligence-based or machine-learning based engine, such as a neural network data processing structure, and the affected area can e.g. be measured using on-air imaging devices. The variant with the proposed grid-cell-based floodplain mapping is an inventive remote sensing intensive process that can e.g. be implemented all over the defined area. It can e.g. comprise a Digital Elevation Modelling (DEM) structure, with the predefined or adaptive measuring accuracy based on the selected grid size. The DEM structures allow the inventive system to derieve the slope and terrain characteristics of the selected area. Is there a river, and if so is there a flat expanse of plain around that river? What might be below sea level that is near the mouth of a delta? To get the highest accuracy possible for these DEMs, the inventive system can e.g. use remote sensing. In particular measuring devices for aerial or space-based photography and/or LiDAR devices and Synthetic Aperture Radar (SAR) devices to produce the required high-accuracy DEMs. Aerial imagery can be used with multiple images to generate a DEM being captured using e.g. a plane or UAS. However, the quality of aerial imagery can e.g. be affected by lighting conditions and clouds. LiDAR, which shoots pulses of light and records their response, is an active system. That means it is less affected by lighting conditions, but can measure through light haze and clouds. Also SAR is able to measure through clouds at any time day or night, but is one of the most complicated remote sensing systems to be integrated. With the inventive DEMs, which can also be improved by other imagery sources such as satellite, or UAS imagery, features of importance can be monitored and/or detected in relation to how they relate to possible floodplains. Using remote sensing, the present system allows to classify land cover into many different areas of interest, such as low-lying plains, forests, sandy deltas, and urban areas, and then use those classifications to feed into the floodplain modeling structure. With LiDAR, the system can e.g. also automatically identify buildings and detect where they lie within the possible floodplains, i.e. assign floodplain-related measuring parameter values. These multiple inputs create a map that shows areas where flooding is measured with a higher probability value. The automated mapping can also be used for predictive modelling, cover or flood impact mitigation, and flood preparation or automated alarm signaling for activation of automated alarm systems.

As an embodiment variant, the system is automated to electronically disperse payments or transfer monetary parameter values to achieve the desired automatic cover covering the physical damage or impact caused by the natural event, e.g. the flooding event. The payments are dispersed via an electronic payment transfer module based on the generated parametric coverage monetary pay-out parameter. In particular, it is an object of the present invention to provide an automated method and system for providing dynamic parametric cover to an individual in case of an occurrence of a flood event by using an adaptive risk-transfer structure based on physical flood event measurements.

In another embodiment of the invention, wherein a premium vale is automatically generated based on the selected payout coverage and the forecasted exposure measure, i.e. the forecasted probability measurand for a future time window based on the measured occurrence frequencies and strength. Each risk-transfer can be parameterized as an exchange of risk to cover an actual physical impact to an object for a typically monetary transfer. Each impact by a risk event can be realized by a claim equivalent value, which represents the variable cost factors of a risk-transfer system. It is to be noted that the variable cost factor is difficult to determine compared to variable cost factors in other fields. For example, in the case of a production line, the variable costs, such as raw materials, are quite certain, which makes it easier to minimize it. In technical field of risk-transfer, on the other hand, variable cost factors are often measured to be a probabilistic distribution. Therefore, it is technically challenging to minimize it. In the present invention, AI/ML data processing structures are used to process the flood measuring data. In a simplified embodiment variant, also linear regression and/or generalized linear model (GLM) could be used for processing the measuring data and forecast the appropriate prediction parameter value for the future exposure measurands. However, the inventive Al-based underwriting measures risk measurands (i.e. the forecasted exposure probability values) with a much higher precision. In addition, the measuring data of the inventive system are rich compared to prior art system, as it is linked to and comprises a plurality of loT-measuring devices. Therefore, the inventive system is able to assess the forecasted risk measurands more precisely. Uncertainty of variable cost values diminishes for the inventive system adopting the proposed technologies. Thus, the system makes it easy to determine and optimize automatically and self-sufficiently pricing values for the risk-transfer based on the measured flood parameter values. Further, the geographic area is of unvarying landscape representative of area covered by dry land and wetland.

Further, the occurrence of the flood event can e.g. be detected using loopback signaling. The herein proposed technical loopback mechanism is especially shaped for the flood detection providing an inventive loopback flood detection method and system. A source maintenance end point at the flood area sends a loopback message to the target maintenance point at the central measuring engine, wherein the loopback message comprises a flow identity corresponding to one specific transmission path in a plurality of equal transmission paths to the target maintenance point. After receiving the loopback message, the target maintenance point sends a loopback replay message to the source maintenance end point, wherein the loopback replay message comprises a flow identity corresponding to a reverse common transmission path to the source maintenance end point. After receiving the loopback replay message and detecting to be correct, the source maintenance end point returns an announce of successful loopback detection. According to the inventive loopback detection method, the working mechanism of prior art loopback detection is expanded, and loopback detection can be performed on one specific path in a plurality of equal paths, thus allowing and providing high-speed transmission and detection of occurring flood by flood measurements in real-time or quasi-real-time.

According to the present invention, these objects are achieved particularly through the features of the independent claims. Additional features and advantages will become apparent to those skilled in the art upon consideration of the following detailed description of illustrative embodiments exemplifying the best mode of carrying out the method as presently perceived.

### Short description of the figures

The present disclosure will be described hereafter with reference to the attached drawings, which are given as non-limiting examples only, in which:
Figure 1 is a block diagram illustrating exemplary an architecture of the inventive flood measuring and trigger system 1 and method for triggering a dynamic parametric flood impact cover for physical objects 3/31 being measurably impacted by an occurrence of a flood event 4 by using an adaptive damage-cover structure 1031 of an electronic damage-signaling and/or damage-cover system 103 based on physical flood event measurements.
Figure 2 is a schematic diagram, which exemplarily illustrates a possible overall operation of one embodiment of the method of the present invention.
Figure 3 is a chart, which shows a structure scheme presenting an impact of flood event.
Figure 4 is a chart, which shows a payout scheme used during occurrence of flood event in relation to topography and exposure distribution.

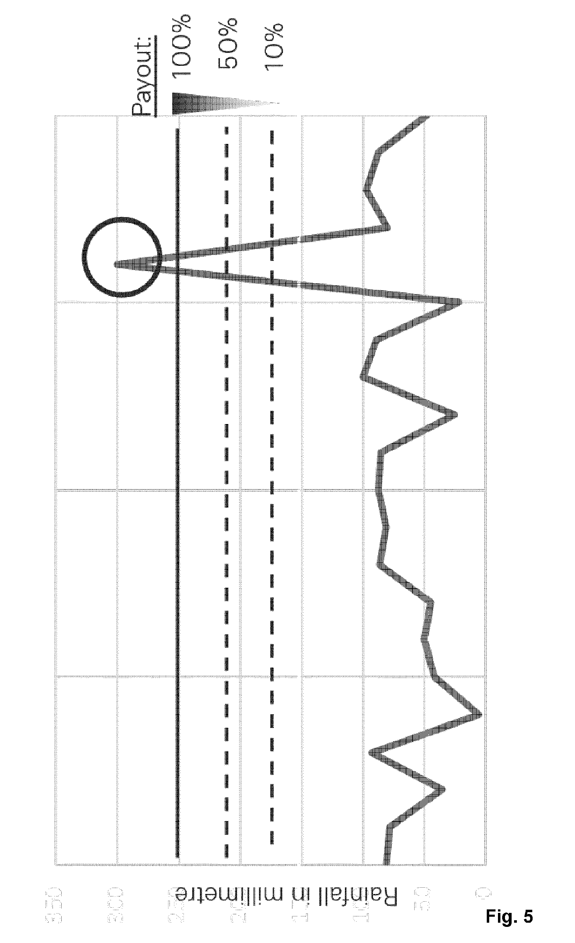

Figure 5 schematically illustrates an exemplary parametric risk-transfer relying on the measurement of a natural physical measuring parameter or index (parameter). Automated cover by a payout transfer given by a predefined amount is made when a predefined threshold of parameter/index is exceeded (e.g. amount of rainfall, flood at location).

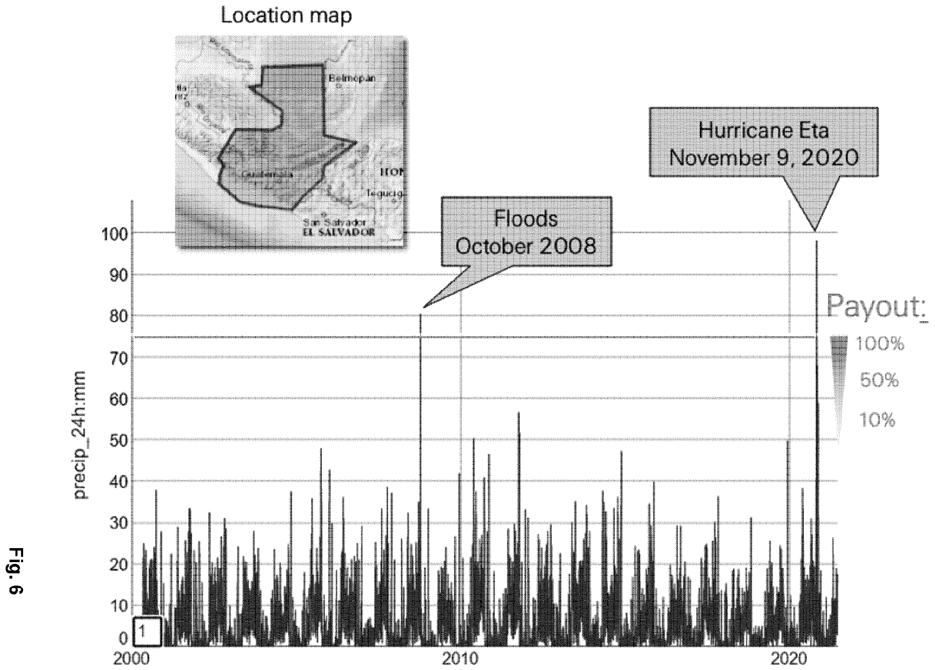

Figure 6 schematically illustrates an exemplary parametric excess rainfall risk-transfer (as a proxy for flood). Daily average rainfall amounts over Central America measured by satellite measuring data. An aggregated amount of rolling observation window (e.g. 2-days) must exceed pre-defined rainfall levels. It is to be noted that rainfall ≠ floods on the ground.

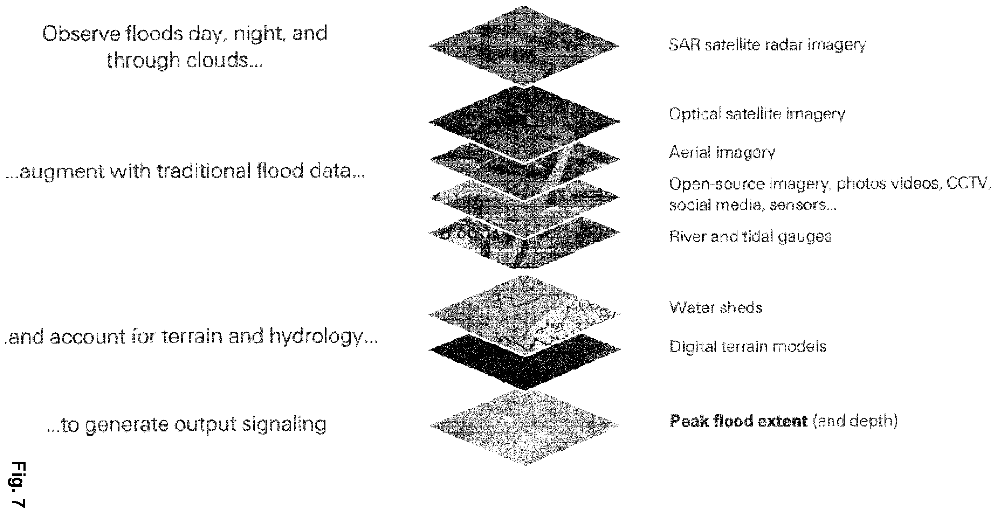

Figure 7 schematically illustrates an exemplary flood map generation through multi-source measuring parameter processing.

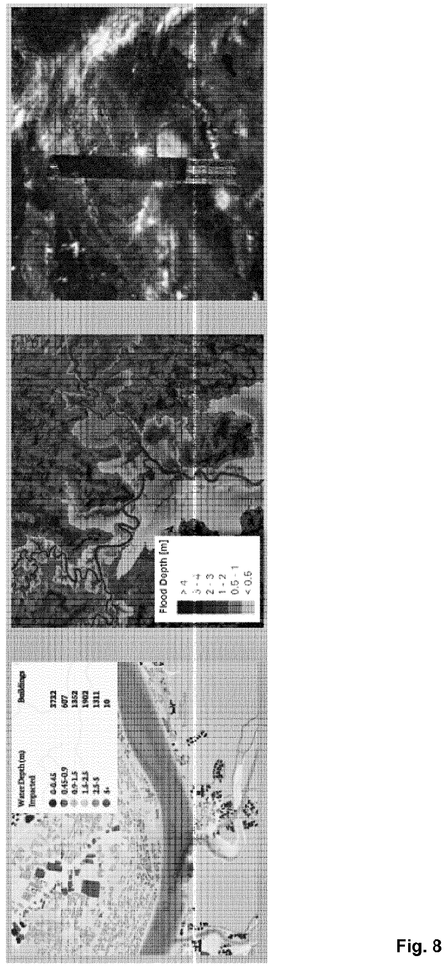

Figure 8 schematically illustrates an exemplary processing of flood event footprints, where satellite data are measured, an object level of a high spatial resolution up to 1x1 meter is achieved, daily observations with any non-permanent water for >12 hours is detected and delivered near real time, and radar technology allows monitoring through clouds and at night.

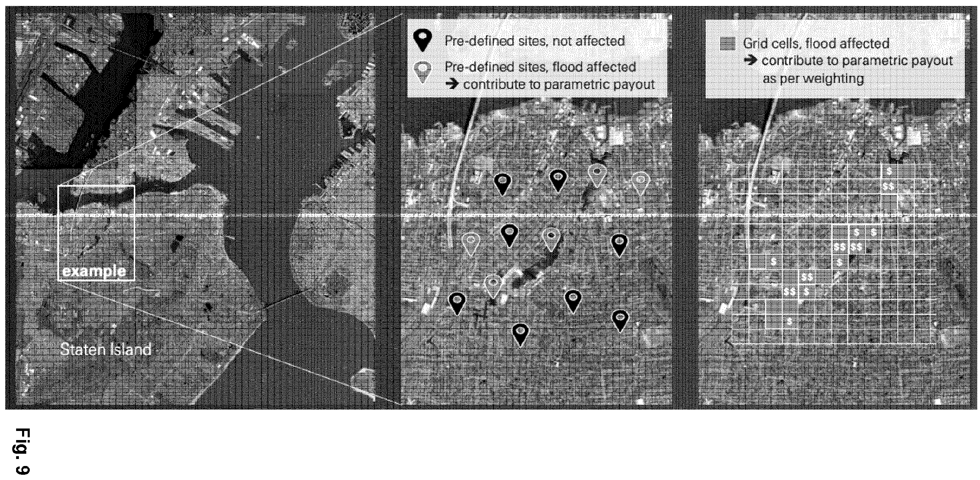

Figure 9 schematically illustrates an exemplary parametric flood risk-transfer structure triggered by the inventive flood measuring footprints based on maximum flood extent.

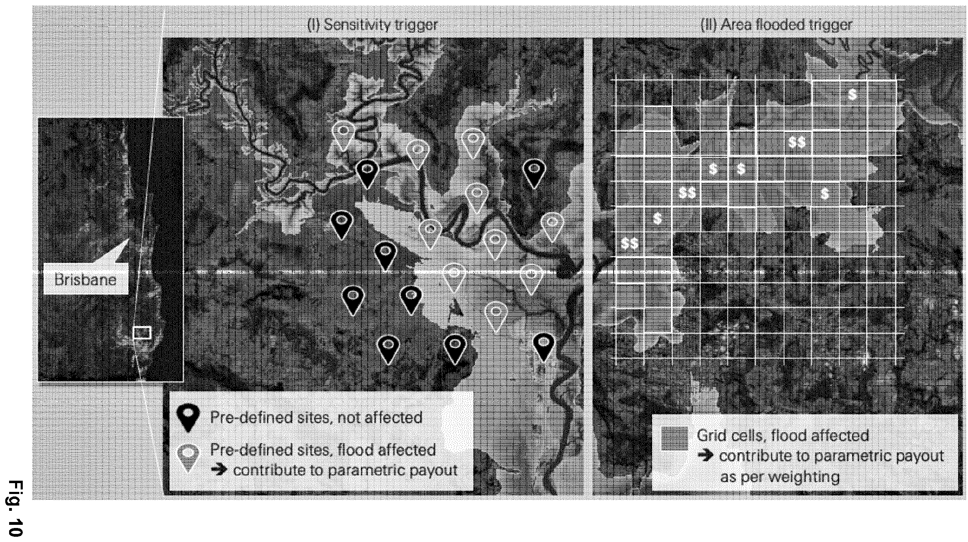

Figure 10 schematically illustrates an exemplary identification of critical sites or objects 3 and generating a grid over a geographic area 2 of interest at which a flood is measured. A flood extent mapping is provided by the system 1 within 24 hours after peak flood. The system 1 automatically detects if pre-determined sites were flooded. Cover with defined payout amounts for all affected sites and/or objects 3 can e.g. be provided within 30 days, thereby optimizing financial resilience and enable an immediate response.

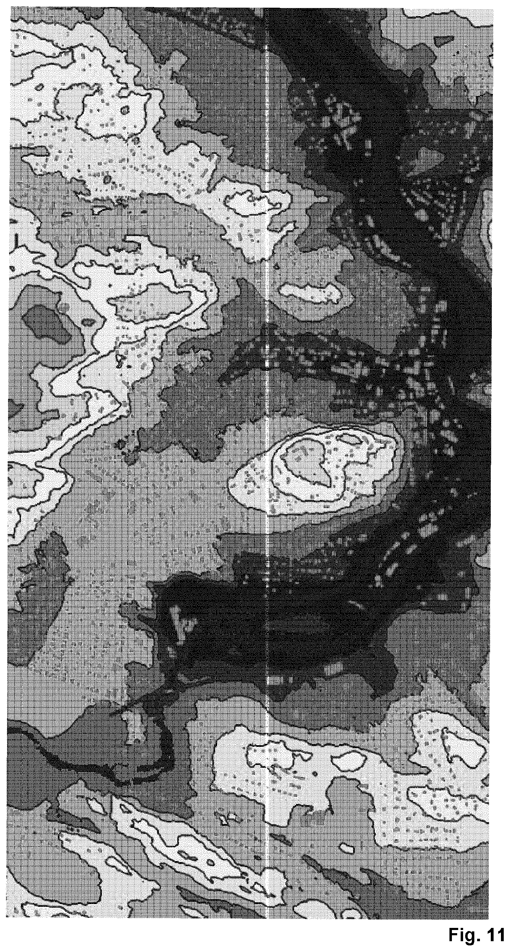

Figure 11 schematically illustrates an exemplary flood map or digital elevation map from satellite imagery classification. Physical objects 3, as e.g. buildings or other constructions, can e.g. be automatically located using LiDAR which, inter alia, allows the system 1 to detect how close a physical object 3 lies or within which flood zones.

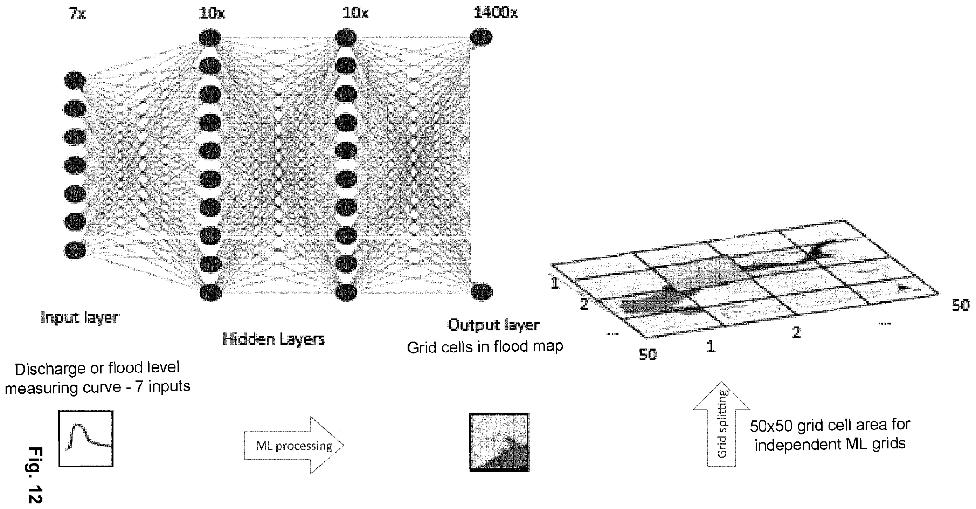

Figure 12 shows schematically a machine-learning setup. The geographic area 2 is divided in 50 × 50 grid cell 1003 raster each simulated by its own machine-learning structure. Input layer: seven input hydrographs. Output layer: flood inundation extent in each grid 1002 and/or grid cell 1003.
Figure 13 shows schematically grid cells 1003 based stream-flow measurements which can e.g. be an important measuring parameter that also impacts many other aspects as e.g. the river's hydrology and water quality.
Figure 14 shows schematically an exemplary flood grid 1002 measuring flood depth, where the darker areas represent greater flood depths
Figure 15 shows schematically exemplary dynamically adjusted grid cells 1003, wherein the cells 1003 are chosen to be dynamically adapted by the system 1, where areas closer to the flooding and/or river etc. are applied with a high measuring resolution than areas further away. This allows a more precise measurement of flooded areas 21 than achieved by the prior art systems.
Figure 16 shows schematically exemplary measurements of the geographic area 2 by satellite measurements detecting flooded grid cells 1003 and not flooded grid cells 1003. The influence of clouds is eliminated by comparing and/or calibrating dry and wet measuring signals (left diagram). Water has a lower brightness temperature measured than land (right diagram).

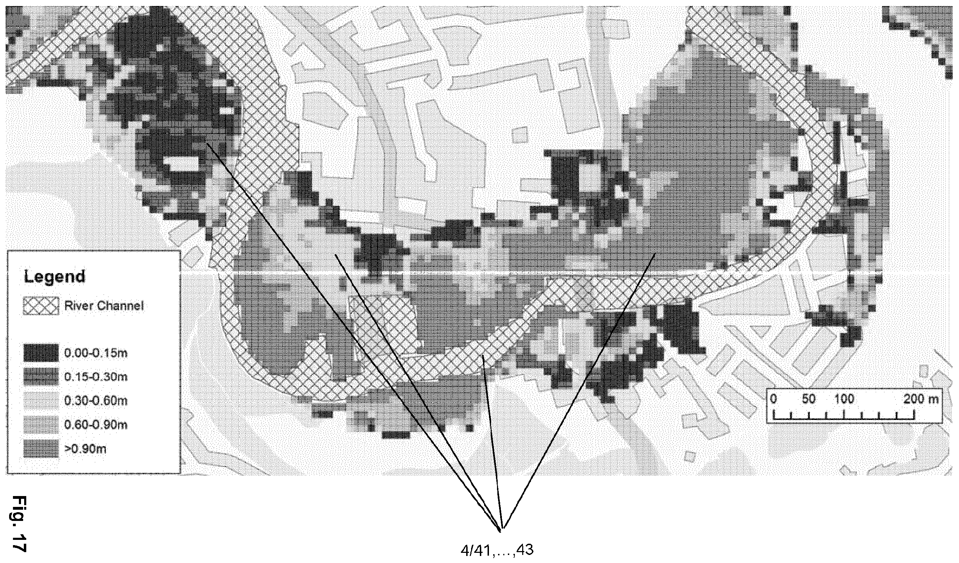

Figure 17 shows schematically exemplary measurements a flood event 4/41,42,43 in a the geographic area 2 based on grid cell measuremetns.

### Detailed description

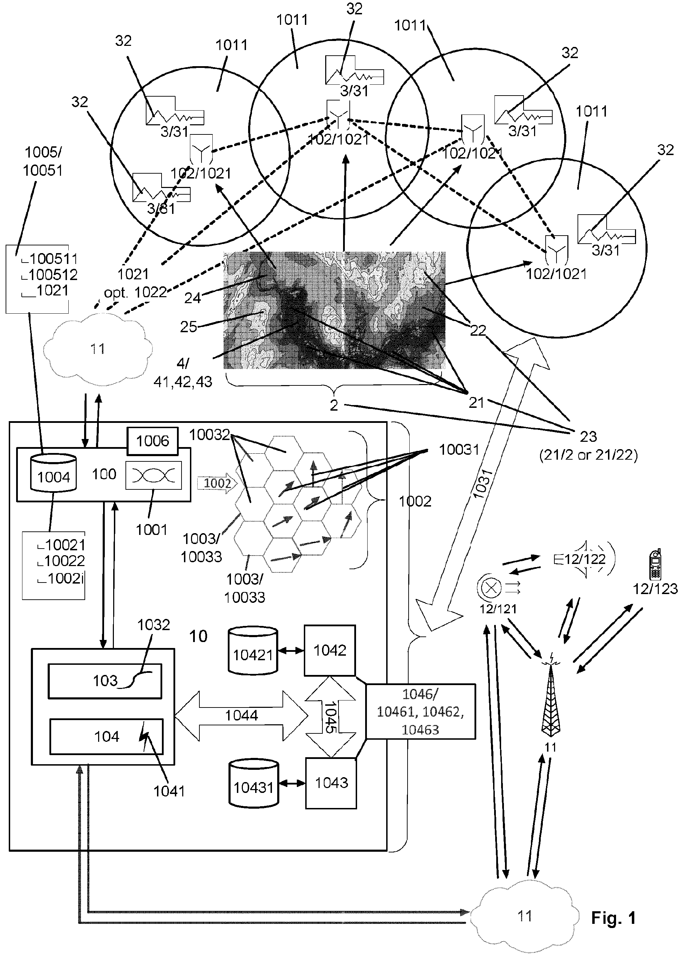

Figure 1 shows an exemplary architecture for a flood measuring and trigger system 1 and an automated method for providing a dynamic parametric flood impact cover 1031 for physical objects 3/31 being measurably impacted by an occurrence 41/42/43 of a flood event 4 by using an adaptive damage-cover structure 1041 of a damage-cover system 104 based on physical flood event measurements.

The flood measuring and trigger system 1 comprises a central measuring engine 10 with a predefined data structure 1005 for capturing a geographic area 2 to be covered, the data structure 1005 at least comprising definable area parameters 10041 capturing geographic location 100511 and/or geographic extent 100512 of said geographic area 2. Predefined data structure 1005 comprises grid parameters 10033 for splitting the geographic area 2 to be covered by the spatial grid 1002 with equidistant or variable grid cells 1003 of definable or automatically adaptable size 10033 by means of a dynamic grid splitter 1001. The grid cells 1003 can e.g. be defined as two dimensional blocks of m x n size 10033. The two dimensional m x n blocks 1003 can e.g. be of approx. 8.72 * 10-5 radian size 10033. The dimensional m x n blocks 1003 can e.g. be of approx. 0.005 * 0.005 deg size 10033. Grid shape 10034 (curvilinear/structured or triangular/unstructured) and the selected grid size 10033 affect the output of the damage signaling or damage cover system 104. For the present system 1, e.g. dependent on the topology or geographic characteristics or desired resolution, structured, unstructured and/or hybrid grids 1002 can be applied.

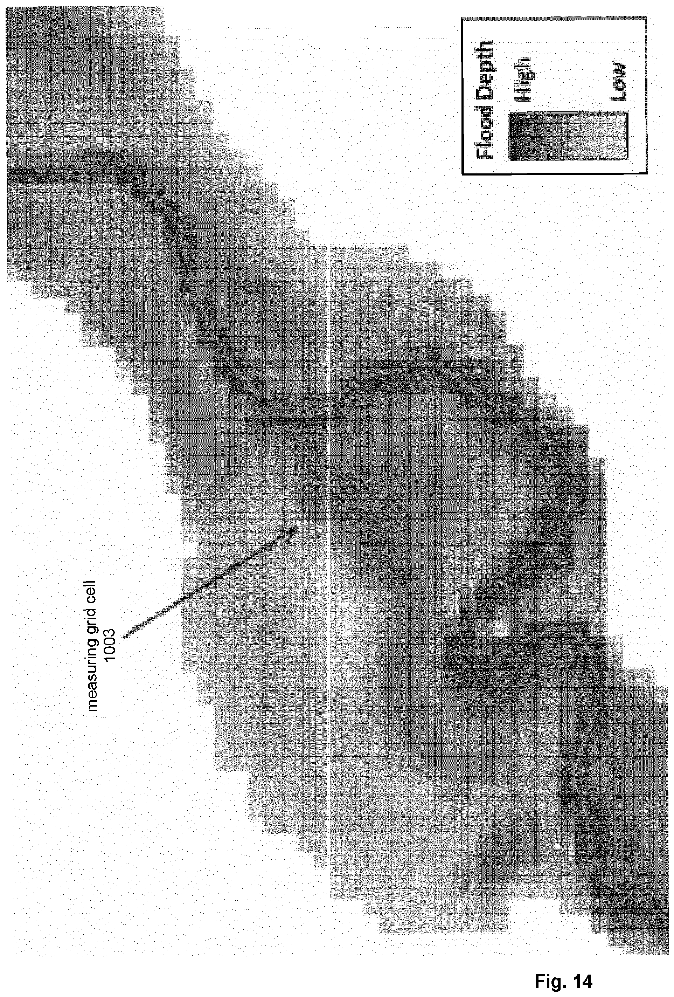

To capture flood exposure or risk measuring data and to automatically trigger actions or alarm systems, detailed flood measuring parameters values 1021 are measured on depth of flooding and/or probability of flooding and/or other flooding characteristics, transmitted to the central measuring engine 10 and stored as grid measuring datasets (see figure 14, where the darker areas represent greater flood depths). The measuring grid cells 1003 can e.g. be realized as a digital raster dataset that defines geographic space as an array of equally or adjustably sized square cells 1003 arranged in rows and columns. The value in each cell represents the magnitude in that location of the flooding characteristic represented by that particular grid. Within a flood measuring parameter database, grids 1002 can be produced to reflect water surface elevations and/or depths and/or velocities and/or percent-annual-chances of flooding and/or other measuring values. The grids 1002 can e.g. be chosen based on the topography of a geographic area 2, e.g. being unique to coastal areas and dams.

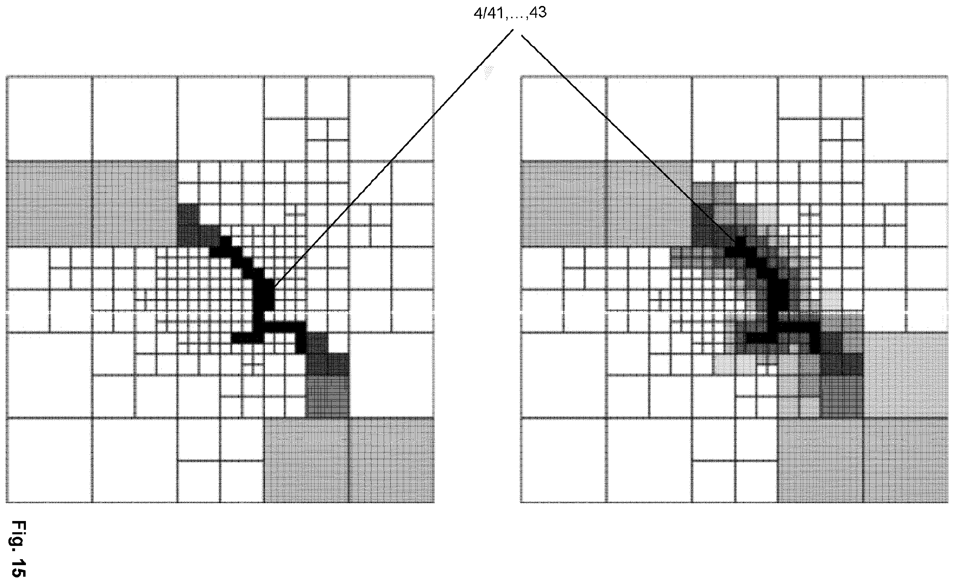

In one embodiment variant, for the grid cell resolution, it should e.g. be taken into account when selecting the cell size 10033 for the grids 1002, that the depth and measuring grid cells 1003 have an inherent relationship to the underlying topographic data used during the development of the flood hazard delineations, which can e.g. be depicted on the flood risk rate map. The raster cell size (resolution) 10033 of all raster datasets measured should be based on the density of the ground elevation data used and the appropriate precision that can be supported by the measurements. Normally, all the gird measuring datasets can e.g. use the same grid cell size 10033. However, the cell size 10033 for the grids 1002 can e.g. be no larger than 3 x 3m. This will allow for a more accurate depiction and retrieval of the measuring values from that grid dataset. In the present system 1, a two dimensional horizontal modeling structure can e.g. be applied to get the detailed and accurate map of water levels and/or flood patterns and/or potential flood exposed areas. Instead of equal sized grid cells 1003, also structured curvilinear grids 1002 can e.g. be used for the hydraulic forecast processing, where the curvilinear grid cells 1003 provide a precise forecast output signaling by allowing cell stretching along river main channels while orthogonality stays within reasonable bounds. However, the use of curvilinear grid cells can e.g. result in a high resolution in sharp inner bends since grid lines are focused on the bends. A technically not required high resolution can strongly increase computational and processing time. In a preferred embodiment variant, the measuring grid cells 1003 are chosen to be dynamically adapted by the system 1 (see figure 15), where areas closer to the flooding show a high resolution than areas further away. This allows a more precise measurement of flooded areas 21 than achieved by the prior art systems.

The flood measuring and trigger system 1 comprises flood detection devices and/or flood sensors 102 for measuring an occurrence of a flood event 4 by measuring floodings within grid cells 1003 of the spatial grid 1002, wherein flood measuring parameters 1021 of the flood detection devices and/or flood sensors 102 are transmitted to the central measuring engine 10 and wherein, based on the transmitted flood measuring parameters 1021, grid cells 1003 measured as flooded are contributing to the area 21 measured as affected while grid cells measured as not flooded are not contributing to the area 22 measured as affected. The geographic area 2 can e.g. comprise surveyed landscape representative of area covered by dry land 24 and wetland 25. The geographic area 2 can e.g. comprise at least parts definable as automatically excluded from the dynamic parametric flood impact cover 1031. The occurrence of the flood event 4 can e.g. be detected using loopback signaling 1022 for the signaling of the flood detection devices and/or flood sensors 102. The herein proposed technical loopback mechanism is especially shaped for the flood detection providing an inventive loopback flood detection method and system. A source maintenance end point at the flood area sends a loopback message to the target maintenance point at the central measuring engine, wherein the loopback message comprises a flow identity corresponding to one specific transmission path in a plurality of equal transmission paths to the target maintenance point. After receiving the loopback message, the target maintenance point sends a loopback replay message to the source maintenance end point, wherein the loopback replay message comprises a flow identity corresponding to a reverse common transmission path to the source maintenance end point. After receiving the loopback replay message and detecting to be correct, the source maintenance end point returns an announce of successful loopback detection. According to the inventive loopback detection method, the working mechanism of prior art loopback detection is expanded, and loopback detection can be performed on one specific path in a plurality of equal paths, thus allowing and providing high-speed transmission and detection of occurring flood by flood measurements in real-time or quasi-real-time.

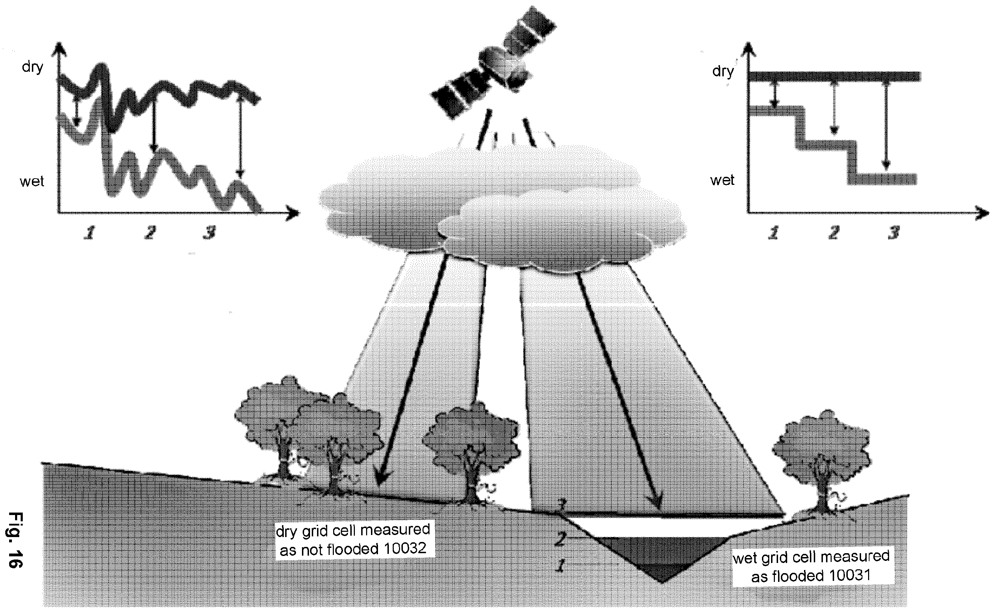

It is to be noted that the present inventive measuring system 1 can e.g. in an embodiment variant also be used as flood warning system 1. Monitoring is important: While some areas are more exposed to flooding than others, situating measuring devices and flood sensors 102 near waterway or body of water provides critical and precises in-loco measuring data. The affected area 21 can e.g. be measured using gages and telemetry equipment 1025. The present inventive system 1 is based on the regular measuring of local rainfall, stream level, and streamflow data in each grid cell 1003. This can be real-time monitoring with telemetry allowing for the fastest possible response to a flood event. It is clear that a real-time flood warning system 12/121,...,123 can reduce risks involved with flooding. The affected area 21 can e.g. be measured using at least partially air-based and/or space-based optical measuring devices 1023/1024 using digital image recognition processing (see figure 16). The present system 1 forecasts floods using the below described model structures for forecasting how rivers and streams respond to varying levels of measured rainfall and snowmelt. These forecast processing are based on already measured data records of flood level and/or stream stage and/or discharge, the generation for which are outlined below.

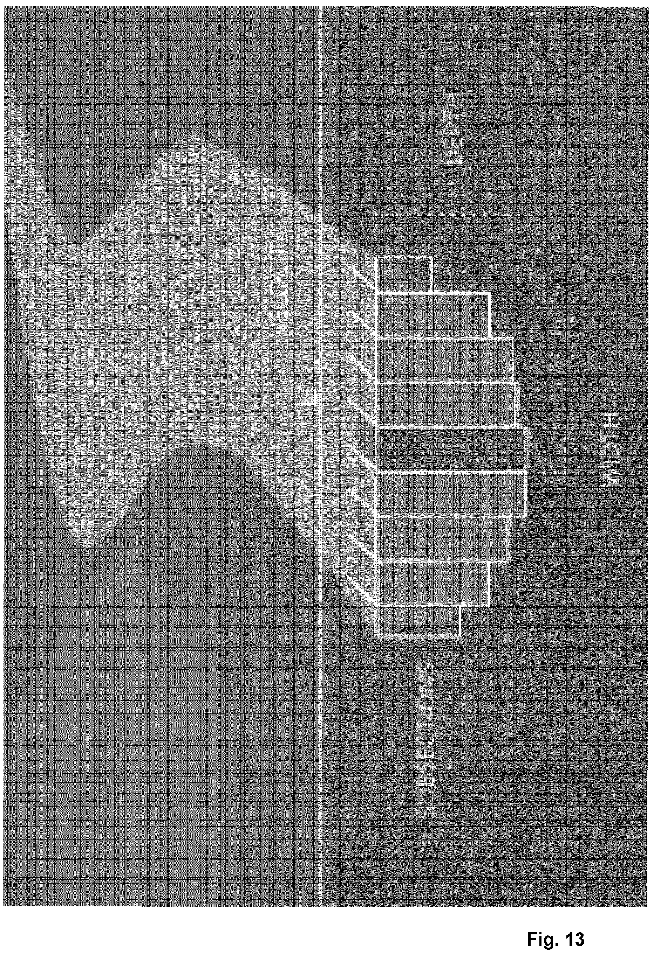

There are a broad variety of automated stream gages that can transmit stream level data via telemetry. Gages developed according to the NWS ALERT protocol are among the most common. However, it's to be noted that many other gages designed to measure precipitation and water level operate under similar principles, and this guide may be applicable to certain aspects of other systems. The gages, used herein, perform two primary tasks: sensing and communicating. The gages, as used herein, employs sensors to detect changes to measuring parameters, e.g. precipitation volume and/or water level. As an embodiment variant, the used gages may also be equipped with temperature and wind speed sensors. Some gages can also provide site-specific measuring data regarding the health or technical status of the measuring unit. For example, for the present inventive system 1, the gage can e.g. be designed to detect a particular "event", e.g. 1 millimeter of rainwater entering the gage's tipping bucket through the top of its funnel. When the bucket tips, it pours out any water within, engaging a switch that transmits alert data and resetting the bucket. Any other sensors on the gage will also activate the alert data transmitter after detecting said specific event. On days without rain, the gages can e.g. transmit a "no rain" report to show that the device 102 is still working. In the embodiment variant with automated flood warning 12/121,122,123 the system 1 can e.g. use radio, cellular, or satellite telemetry to communicate with an alarm host computer or alarm network. The system 1 can also specifically operate alarm signals using radio frequencies and/or satellite and/or cellular telemetry. For the present system 1, it is to be noted that while streams and rivers can be monitored for many mearing qualities and parameters that they share with lakes, ponds and basins, streams and rivers possess one quality that differentiates them from other freshwater bodies, namely their movement. For the forecast processing by the present system, stream-flow can e.g. be an important measuring parameter that impacts many other aspects of a river's hydrology and water quality (see figure 13).

As an embodiment variant, the grid cells 1003 measured as flooded 10031 can e.g. be determined using at least an artificial intelligence based data-processing structure and/or a machine-learning-based data-processing structure. It is to be noted that the present inventive system generally can also be operated applying one or more types of numerical modeling structures for predictive flood parameter generation. For example, a hydrological rainfall run-off modeling structure can e.g. be used to forecast distributed river discharges. Also a one-dimensional (1D) drainage modeling structure can e.g. be applied based on the one-dimensional Saint-Venant flow forecasting to predict surcharges or drainages. Further, also a two-dimensional (2D) Saint-Venant flow forecast can e.g. be used for simulating the surface inundation, and obtain a forecasted maximum flood extents, maximum depths, and flow velocity on defined points on the surface. Furthermore, a 1D-2D coupling structure can be applied. All proposed embodiment variant relies on sensory and/or field measurements for capturing the inventive input parameters and their specific technical selection. However in a preferred embodiment variant, the system relies on a data-driven approach for establish a reliable flood forecast structure based on flood measurements. Unlike the numerical structure, the inventive data-driven, physical-based measuring and forecast system requires measuring input/output data only. The inventive data-driven structure has shown its high performance especially for the technical nonlinear flood forecast problems. In particular, ANN-based forecast structures can be applied, however the technical problem of overfitting or under-fitting the measuring data, and insufficient length of the data sets can lead to erroneous forecast output results. To expand the data-driven forecast structures for short and long term flood forecasts, combined use of neuro-fuzzy structures and/or support vector machine (SVM) and/or support vector regression and/or artificial neural network (ANN) are also possible. More particularly, artificial neural network showed to be a reliable technique for the inventive flood prediction, as for forecasting water levels by applying ANN forecast structures to conventional hydrological modeling in flood-prone catchments. In another embodiment variant, the water level forecast results along a river uses backpropagation and/or conjugate gradient and/or cascade correlation. One possibility is to combine a Levenberg-Marquardt Backpropagation with cross-validation to prevent the under-fitting and overfitting in daily reservoir inflow forecasting.

Finally, in another preferred embodiment variant, the maximum flood inundation in a geographic area is determined by machine-learning based structure applying a backpropagation networks based on multiple inflow measuring data for a grid resolution of m × n. This ANN technique allows for a geographic area to provide high-resolution flood inundation maps from river flooding. For the prediction of maximum flood inundation, only the real-time discharges of the upstream catchments or flood level measurements are needed. The procession consists of two phases: the training phase collects a part of the measuring data from the existing database, tuning the model by changing the weights on input arcs to minimize the bias on the output layer; the recalling phase produces the new outputs for the testing inputs. The rest individuals in the training dataset are used for evaluating the behavior of the network structure. The total bias between the output of ANN and the observed values is defined as the error function. In order to reduce the error function in each iteration, the weights are modified automatically by the system 1. Herein, the learning rate is used for automatedly scaling the gradient in each iteration of the weight update. It is to be noted that the system can be sensitive to select up the correct value, since a large learning rate can miss the optimal point, while a small learning rate can slow the training process. For example, the gradient descent algorithm can be used by the system 1 to generate the update of the weights values. To speed up the convergence of the iteration, resilient backpropagation can e.g. be applied in the present case for treating the update of weight values differently depending on the derivative of the error function. For optimization, larger alternative learning rate can e.g. be set for speeding up the iterations if the error gradient remains in the same direction in neighboring time-steps and smaller alternative learning rate when approaching the optimal weights.

Due to the total number data of measuring grid cells 1003 (resolution of m x n), a single hidden layer can exceed 365 thousand elements. To technically optimize the storage requirement and the ANN structure training time, the geographic area 2 can e.g. be subdivided into 50 × 50 cell-squared grids 1002, each grid 1002 having its own independent ANN structure (the output layer having 1400 elements). It is to be noted that with the same inventive technical approach, instead of measuring the real-time discharges of the upstream catchments for the prediction of maximum flood inundation, rainfall measurements and/or flood level measurements can be selected as input measuring values for the machine-learning-based structure. To optimize the ANN processing technically further, clustering can be applied to the training measuring dataset. Like this, the size of the training measuring dataset can optimize and reduced while still keeping the main representative events. As such the training time can be reduced and the overfitting effects minimized. Further, to measure the technical performance of the prediction processing of maximum flood inundation by the applied ML structure, the mean squared error (MSE) of each grid can e.g. be used. It is assumed that the flood maps from the events used are the observed values. As each grid 1002 has its own independent training network, the MSE can e.g. be measured using all the grid cells 1003 in each grid 1002.

The central measuring engine 10 comprises a flood threshold measurand1032, wherein the flood threshold measurand 1032 is selected from a percentage 23 of the geographic area 2 given by the area 21 measured as affected to the total geographic area 2. The adaptive damage-cover structure 1041 can e.g. only be triggered if the flood threshold measurand 1032 is measured to exceed a predefined flood threshold value 1033. In another embodiment variant, the adaptive damage-cover structure 1041 can e.g. be triggered to provide a damage cover 1031 directly dependent on the measured flood threshold measurand 1032.

The central measuring engine 10 comprises an electronic flood trigger 103 for triggering the adaptive damage-cover structure 1041 covering physical damages or loss associated with the measured occurrence of the flood event 4, the occurrence measurably impacting physical objects 3/31 situated in the affected area 21 and/or grid cells 1011 measured as affected 10111, wherein the adaptive damage-cover structure 1041 is adapted by the damage-cover system 104 based on the flood threshold measurand 1032 providing the dynamic parametric flood impact cover 1031. The adaptive damage-cover structure 1041 of the damage-cover system 104 can e.g. be triggered by transmitting electronic steering signals from to the automatedly steered electronic first and/or second resource-pooling system 1042/1043, wherein the adaptive damage-cover structure 1041 is adapted by the damage-cover system 104 based on the flood threshold measurand 1032 transmitted by the electronic steering signals. Further, the triggering the adaptive damage-cover structure 1041 for covering physical damages or loss 32 associated with the measured occurrence of the flood event 4 can e.g. comprises generating a parametric coverage 1031 based on the adaptive damage-cover structure 1041, and transferring, by an electronic payment transfer module, based on the generated parametric coverage 1031 monetary pay-out parameter values by electronic payment transfer to cover the physical damages or loss 32 associated with the measured occurrence. As an embodiment variant, a premium value can e.g. automatically and optimized generated based on a specific selection of the parametric flood impact cover 1031.

The triggering the adaptive damage-cover structure 1041 for covering physical damages or loss 32 associated with the measured occurrence of the flood event 4 can e.g. comprise generating a parametric coverage 1031 based on a cover activation signaling or electronic payout function 1046, and transferring, by an electronic payment transfer module, based on the output of the cover activation signaling or electronic payout function 1046a monetary pay-out by electronic payment transfer to cover the physical damages or loss 32 associated with the measured occurrence. The cover activation signaling or electronic payout function 1046 can e.g. comprise a linear payout function 10461 and/or a stepped payout function 10462 and/or a deductibles-based payout function 10463. The cover activation signaling or electronic payout function 1046 can e.g. be selectable based on topography and/or exposure distribution. The cover activation signaling or electronic payout function 1046 can further e.g. be user-specific definable.

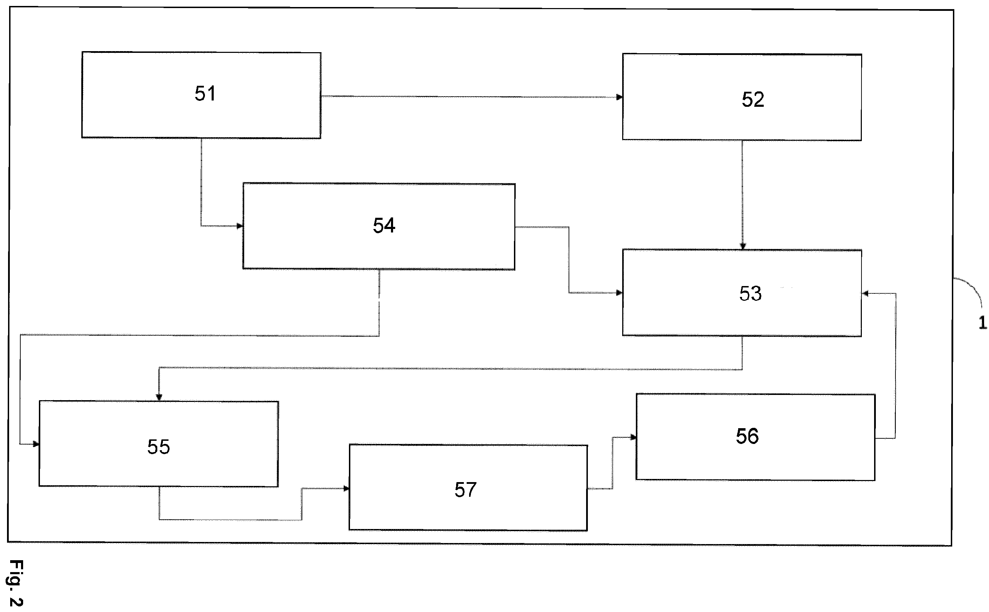

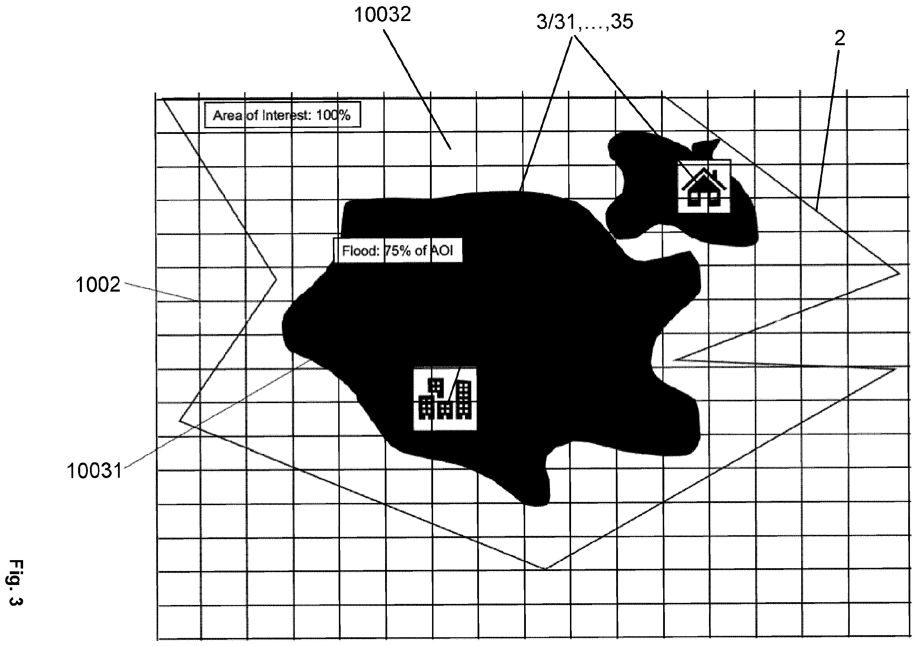

Figure 2 shows an exemplary schematic process of the present invention, which illustrates an overall operation of an embodiment of an automated system providing a dynamic parametric flood impact cover for an object physically impacted by the flood and/or to an individual assigned to the impacted object. An automated system 1, is disclosed for providing a dynamic parametric flood impact cover to flood impact exposed physical objects 3 and/or a flood risk exposed individual in case of an occurrence of a flood event 4. The dynamic parametric cover 1031 is provided by using an adaptive risk-transfer structure 1041 based on physical flood event measurements. In one embodiment, at reference number 51, a trigger is generated by a trigger module and the trigger is activated upon occurrence of the flood event. The trigger may provide measuring data 1021 corresponding to such as flood extent, flood depth. The generation and measurement of measuring data 1021related to the flood event 4 is explained in detail in conjunction with Figure 2 of the present invention. At reference number 52, an embodiment variant with a payout function 1046 is shown, where the payout function 1046 is activated (at reference number 52 and triggers the payout calculation function (at reference number 53). The payout generated is dependent on occurrence of the flood event, regardless of actual loss incurred in the flooding event. The payout function is explained in detail in conjunction with Figure 3 of the present application. Further, in another embodiment, an independent third party system or an electronic reporting agent or broker or a third party calculation agent, at reference number 54) determines an intensity of the flood event. The independent third party/reporting agent provides the information to the object 3 or exposed individual (at reference number 54) to initiate payout generation and automatically triggering payout transfer (at reference number 53) and also informs to the individual (at reference number 55). In another embodiment, an automated module may be used to generate the payout, and automatically intimate the insured and initiate the payment. The exposed individual (at reference number 55) is the one who may purchase a cover specifying a maximum payout from the system 1 (at reference number 56). The maximum payout cover is based on extend of the flooded area 21. The premium (at reference number 57) is transferred to the system (at reference number 51) depends on the chosen limit as well as on the area 21 affected by the flood 4 (at reference number 55). In one embodiment, the premium is generated using probabilistic modelling structures, upon numerous reviews.

In figure 3, an exemplary structure scheme is shown presenting an impact of the flood event in a specific region. The trigger data may be obtained from highly reputed independent third party agency that are mutually in agreement with the individual. The third party agency may be, for example, use on-air imaging device such as Synthetic Aperture Radar (SAR) satellite imagery and drone based imagery that provide multiple images to capture flood depth and flood extend.

In one embodiment, the automated system (at reference number 1) first measures an Area of Interest (AOI). The AOI is an extended flooded area of a total area cover of the region. The generated AOI is then divided into a plurality of grid cells (at reference number 1003 of a spatial grid 1002. The grid cells 1003 defining the desired resolution, may be determined randomly or dynamically, for example, the grid cells may be defined as two dimensional m x n blocks such as 500m X 500n (0.005x.005 deg.) blocks of approx. 8.72*10-5 radian. Upon occurrence of the flood event, an affected area (AA) is determined, by calculating the number of grid cells that are totally flooded. In one embodiment, the grid cells measured as flooded are determined using, for example, a neural network approach, a double grid approach, and the like. In addition, the grid cells measured as not flooded do not contribute to the measured affected area of the AOI. Thereafter, the percentage (at reference number 53 of affected area 21 is generated with the relation of AA/AOI. The payout is based on the pre-defined trigger depending upon the percentage of affected area 21. It is to be noted that this predefined trigger can vary from risk-transfer to risk-transfer depending on specific user requirements.

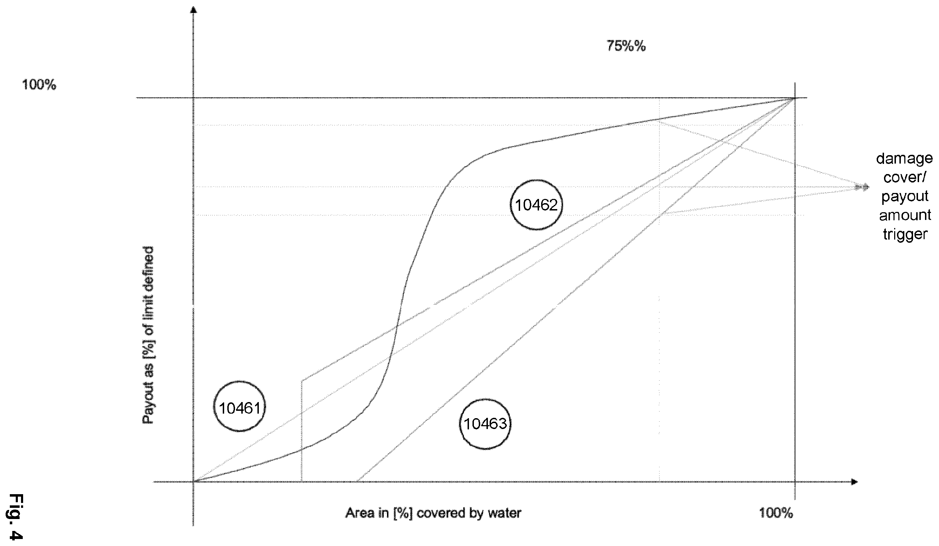

With respect to Figure 4, an exemplary payout structure 1046 can e.g. be used during occurrence of the flood event 2 in relation to topography and exposure distribution is shown via graph. In one embodiment, the payout function can be linear 10461 (straight linear), stepped or with 10462 deductibles (franchise deductibles 10463). The automated system selects payout functions based on topography and exposure distribution. The payout function 1046 may cater to different terrain and exposure distribution with respect to a geographic area. The payout function provides different payout functions to the individual, and the individual is free to select one of the payout function. The payout function may further include suggestions from the individual or risk-exposed insured.

For determining the payout scheme, a parametric coverage for the measured affected area 21 may be generated by covering a possible loss associated with occurrence of the flood event and impacting a geographic area measured by the affected area. The possible loss incurred due to occurrence of the flood event may be determined as per an adjustable risk-transfer structure, a threshold measure. The possible loss incurred may be triggered by a threshold-trigger that is selected from the percentage of the affected area given by the measured affected area to the geographic area (for example, the AOI). By way of an example, the geographic area may include unvarying landscape that represents area covered by dry land and wetland. In one exemplary embodiment, the payout may vary from 0% to 100%. As shown, the measured affected area is around 75% and a limit of around USD 100m is determined under the payout scheme. The insured may receive around 0.75 x USD 100m or around USD 75m. In another embodiment, an electronic payment transfer may be made to the individual by an electronic payment transfer module. The electronic payment transfer may be done based on generated parametric coverage monetary pay-out parameter values. The electronic payment transfer to be made to the individual is limited and may be pre-defined based on prior discussion or agreement with the insured. In some scenarios, the individual may provide information related to the geographic area to be excluded for coverage under the payout scheme.

In yet another embodiment, the risk-assessment parameters used to determine occurrence of the flood event may be accessed using a machine learning (ML) approach. The MI approach may connect flood related measurements of various geographic areas for assessing and/or predicting overall risks by a risk transfer module. In addition, the MI approach may be used to predict a future risk pertaining to occurrence of the flood event, and/or allowing to associate varied losses incurred in the multiple geographic areas due to occurrence of the flood event leading to generation of risk factors for an associated reinsurance module. While a number of features are described herein with respect to embodiments of the inventions; features described with respect to a given embodiment also may be employed in connection with other embodiments. The following description and the annexed drawings set forth certain illustrative embodiments of the inventions. These embodiments are indicative, however, of but a few of the various ways in which the principles of the inventions may be employed.

### List of references

- 1: Flood measuring and trigger system
10 Central measuring engine
100 Data aggregation and preprocessing module
1001 Dynamic grid splitter
1002 Topographic or geographic grid
10021 10021,...1002i Measuring parameters for grid cell i
1003 Measuring grid cells
10031 Grid cells measured as floated/affected
10032 Grid cells measured as not floated/affected
10033 Grid cell size
10034 Grid shape
1004 Persistence storage
1005 Predefined data structure
10051 Area parameter
100511 Geographic location
100512 Geographic extend
1006 Machine-learning based or Al-based module
102 Flood measuring devices/ Flood measuring sensors
1021 Flood measuring parameters
1022 Loopback signaling
1023 Air-based optical measuring devices
1024 Space-based optical measuring devices
1025 Flood measuring gages with telemetry equipment
1026
103 Electronic flood trigger
1031 Dynamic parametric flood impact cover
1032 Flood threshold measurands
1033 Flood threshold value
104 Damage-signaling and/or damage-cover system
1041 Adaptive damage-cover structure
1042 First resource-pooling system
10421 First resources
1043 Second resource pooling system
10431 Second resources
1044 Electronic cover activation signaling and triggering
1045 Risk transfer parameter value optimization
1046 1046 Cover activation function / Electronic payout function (signaling)
10461 Linear payout function
10462 Stepped payout function
10463 Payout function with deductibles (franchise deductibles)
11 Data Transmission network
12 Alarm signaling devices
121 Steering signaling to automated flood-alarm driven devices
122 Acoustic alarm signal devices
123 Digital alarm messaging system
- 2: Geographic area
21 Affected area
22 Not affected area
23 Measured percentage value of affected area vs total geographic area
24 Dry land area
25 Wet land area
- 3: Physical Objects in the geographic area (Flood exposed object)
31 Physical object in a grid cell
32 Physical damage or loss to the object impacted and caused by the occurring flood event
- 4: Flood event
41 Temporal occurrence
42 Geographic / topographic location
43 Event Strength
- 5: Process Flow
51 Central measuring engine with cover activation signaling and triggering
52 Damage cover activation by resource transfer / Payout function
53 Payout parameter value generation and payout Trigger
54 Electronic reporting / Independent third party system
55 Flood exposed object / Risk exposed individual
56 Damage-cover system / Risk-transfer system
57 Automated pricing / Premium transfer

## Claims

1. An automated method for providing a dynamic parametric flood impact cover (1031) for physical objects (3/31) being measurably impacted by an occurrence (41/42/43) of a flood event (4) by using an adaptive damage-cover structure (1041) of a damage-cover system (104) based on physical flood event measurements, wherein a central measuring engine (10) captures a geographic area (2) to be covered by a predefined data structure (1005), the data structure (1005) at least comprising definable area parameters (10051) capturing geographic location (100511) and geographic extent (100512) of said geographic area (2), comprising:
splitting, by the central measuring engine (10), the geographic area (2) to be covered by a spatial grid (1002) with adjustable grid cells (1003) of definable size (10033), wherein the cells (1003) are dynamically adapted by applying areas closer to a flooding and/or river with a higher measuring resolution than areas further away, and wherein a grid cells (1003) is detected to be a flooded grid cell or a not flooded grid cell by the grid cell measurements,
detecting grid cells (1003) to be measured as flooded by a machine-learning based engine with the machine-learning structure providing a grid-cell-based floodplain mapping as a remote sensing process over the defined geographic area (2), wherein by a digital elevation modelling structure of the machine-learning based engine a grid-cell-based floodplain mapping is provided, and wherein slope and terrain characteristics of the selected area are captured by the digital elevation modelling structure with an adaptive measuring accuracy based on the selected grid size,
subdividing the spatial grid (1002) into cell-squared grids, associating for each of the grids its own machine-learning structure with an input and an output layer, and inputting measurements of real-time discharges of the upstream catchments or flood level measurements, for a prediction of a maximum flood inundation as output of the machine-learning structure for a grid cell (1003), wherein the number of inputs to the input layer of a machine-learning structure is based on the number of hydrographs within said grid cell (1003) providing a discharge or flood measuring curve, and wherein the output of the output layer providing a flood inundation extent in each grid cell (1003),
measuring, by flood detection devices and/or flood sensors (102), an occurrence of a flood event (2) by measuring floodings within the grid cells (1003) of the spatial grid (1002), wherein flood measuring parameters (1021) of the flood detection devices and/or flood sensors (102) are transmitted to the central measuring engine (10) and wherein, based on the transmitted flood measuring parameters (1021), grid cells (1003) measured as flooded are contributing to the area measured as affected (21) while grid cells measured as not flooded are contributing to the area measured as not affected (22);
measuring a flood threshold measurand, wherein the flood threshold measurand (1032) is selected from a percentage (23) of the geographic area (2) given by the area measured as affected (21) to the total geographic area (2); and
triggering the adaptive damage-cover structure (1041) to cover physical damages or losses (32) associated with the measured occurrence of the flood event (4), the occurrence measurably impacting physical objects (3) situated in the grid cells (10031) measured as affected, wherein the adaptive damage-cover structure (1041) is adapted by the damage-cover system (104) based on the flood threshold measurand (1032) providing the dynamic parametric flood impact cover (1031).

2. Method according to claim 1, **characterized in that** the adaptive damage-cover structure (1041) is only triggered if the flood threshold measurand (1032) is measured to exceed a predefined flood threshold value (1033).

3. Method according to claim 1, **characterized in that** the adaptive damage-cover structure (1041) is triggered to provide a damage cover (1031) directly dependent on the measured flood threshold measurand (1032).

4. Method according to one of the claims 1 to 3, **characterized in that** the adaptive damage-cover structure (1041) of the damage-cover system (104) is triggered by transmitting electronic steering signals from to the automatedly steered electronic first and/or second resource-pooling system (1042/1043), wherein the adaptive damage-cover structure (1041) is adapted by the damage-cover system (104) based on the flood threshold measurand (1032) transmitted by the electronic steering signals.

5. Method according to one of the claims 1 to 3, **characterized in that** the triggering the adaptive damage-cover structure (1041) for covering physical damages or loss (32) associated with the measured occurrence of the flood event (4) comprises generating a parametric coverage (1031) based on the adaptive damage-cover structure (1041), and transferring, by an electronic payment transfer module, based on the generated parametric coverage (1031) monetary pay-out parameter values by electronic payment transfer to cover the physical damages or loss (32) associated with the measured occurrence.

6. Method according to one of the claims 1 to 5, **characterized in that** the grid cells (1003) are defined as two dimensional blocks of m x n size (10033).

7. Method according to claim 6, **characterized in that** the two dimensional m x n blocks (1003) are of approx. 8.72 * 10-5 radian size (10033).

8. Method according to claim 6, **characterized in that** the two dimensional grid 1002 of 0.0005 is 8.72 * 10-5 radian size (10033).

9. Method according to claim 6, **characterized in that** the dimensional m x n blocks (1003) are of approx. 0.005 * 0.005 deg size (10033).

10. Method according to one of the claims 1 to 9, **characterized in that** the geographic area (2) comprising surveyed landscape representative of area covered by dry land (24) and wetland (25).

11. Method according to one of the claims 1 to 10, **characterized in that** the occurrence of the flood event (4) is detected using loopback signaling (1022).

12. Method according to one of the claims 1 to 11, **characterized in that** the grid cells (1003) measured as flooded (10031) are determined using at least an artificial intelligence based data-processing structure and/or a machine-learning-based data-processing structure.

13. Method according to one of the claims 1 to 12, **characterized in that** the affected area is measured using at least partially air-based and/or space-based optical measuring devices (1023/1024).

14. Method according to one of the claims 1 to 13, **characterized by** generating a premium value based on a specific selection of the parametric flood impact cover (1031).

15. Method according to one of the claims 1 to 14, **characterized in that** the triggering the adaptive damage-cover structure (1041) for covering physical damages or loss (32) associated with the measured occurrence of the flood event (4) comprises generating a parametric coverage (1031) based on a cover activation signaling or electronic payout function (1046), and transferring, by an electronic payment transfer module, based on the output of the cover activation signaling or electronic payout function (1046)a monetary pay-out by electronic payment transfer to cover the physical damages or loss (32) associated with the measured occurrence.

16. Method according to claim 15, **characterized in that** the cover activation signaling or electronic payout function (1046) comprises a linear payout function (10461) and/or a stepped payout function (10462) and/or a deductibles-based payout function (10463).

17. Method according to one of the claims 15 or 16, **characterized in that** the cover activation signaling or electronic payout function (1046) is selectable based on topography and/or exposure distribution.

18. Method according to one of the claims 15 to 17, **characterized in that** the cover activation signaling or electronic payout function (1046) is user-specific definable.

19. Method according to one of the claims 15 to 18, **characterized in that** the geographic area (2) comprises at least parts definable as automatically excluded from the dynamic parametric flood impact cover (1031).

20. A flood measuring and trigger system (1) for triggering a dynamic parametric flood impact cover for physical objects (3/31) being measurably impacted by an occurrence of a flood event (4) by using an adaptive damage-cover structure (1031) of an electronic damage-signaling and/or damage-cover system (103) based on physical flood event measurements, wherein the flood measuring and trigger system (1) comprises a central measuring engine (10) with a predefined data structure (1005) for capturing a geographic area (2) to be covered, the data structure (1005) at least comprising definable area parameters (10041) capturing geographic location (100511) and geographic extent (100512) of said geographic area (2), comprising:
in that predefined data structure (1005) comprises grid parameters (10033) for splitting the geographic area (2) to be covered by the spatial grid (1002) with variable grid cells (1003) of automatically adaptable size (10033) by means of a dynamic grid splitter (1001), wherein the cells (1003) are dynamically adapted with areas closer to a flooding and/or river applying with a high measuring resolution than areas further away, and wherein a grid cells (1003) is detected to be a flooded grid cell or a not flooded grid cell by the grid cell measurements,
in that the flood measuring and trigger system (1) comprises a machine-learning based engine with the machine-learning structure for detecting grid cells to be measured as flooded by a grid-cell-based floodplain mapping as a remote sensing process over the defined geographic area (2), wherein by a digital elevation modelling structure of the machine-learning based engine a grid-cell-based floodplain mapping is provided, and wherein slope and terrain characteristics of the selected area are captured by the digital elevation modelling structure with an adaptive measuring accuracy based on the selected grid size,
in that the spatial grid (1002) is subdivided into cell-squared grids, each of the grids having an own machine-learning structure associated with an input and an output layer, wherein, for a prediction of a maximum flood inundation as output of the machine-learning structure for a grid cell (1003), measurements of real-time discharges of the upstream catchments or flood level measurements are inputted, wherein the number of inputs to the input layer of a machine-learning structure is based on the number of hydrographs within said grid cell (1003) providing a discharge or flood measuring curve, and wherein the output of the output layer providing a flood inundation extent in each grid cell (1003),
in that the flood measuring and trigger system (1) comprises flood detection devices and/or flood sensors (102) for measuring an occurrence of a flood event (4) by measuring floodings within grid cells (1003) of the spatial grid (1002), wherein flood measuring parameters (1021) of the flood detection devices and/or flood sensors (102) are transmitted to the central measuring engine (10) and wherein, based on the transmitted flood measuring parameters (1021), grid cells (1003) measured as flooded are contributing to the area (21) measured as affected while grid cells measured as not flooded are not contributing to the area (22) measured as affected;
in that the central measuring engine (10) comprises a flood threshold measurand (1032), wherein the flood threshold measurand (1032) is selected from a percentage (23) of the geographic area (2) given by the area (21) measured as affected to the total geographic area (2), and
in that the central measuring engine (10) comprises an electronic flood trigger (103) for triggering the adaptive damage-cover structure (1041) covering physical damages or loss associated with the measured occurrence of the flood event (4), the occurrence measurably impacting physical objects (3/31) situated in the grid cells (1011) measured as affected (10111), wherein the adaptive damage-cover structure (1041) is adapted by the damage-cover system (104) based on the flood threshold measurand (1032) providing the dynamic parametric flood impact cover (1031).

## Patentansprüche

1. Automatisiertes Verfahren zum Bereitstellen einer dynamischen parametrischen Hochwasserauswirkungsdeckung (1031) für physische Objekte (3/31), die messbar von einem Auftreten (41/42/43) eines Hochwasserereignisses (4) beeinträchtigt werden, unter Verwendung einer adaptiven Schadensdeckungsstruktur (1041) eines Schadensdeckungssystems (104) basierend auf physischen Hochwasserereignismessungen, wobei eine zentrale Mess-Engine (10) ein geographisches Gebiet (2), das von einer vordefinierten Datenstruktur (1005) gedeckt werden soll, aufnimmt, wobei die Datenstruktur (1005) mindestens definierbare Gebietsparameter (10051) umfasst, die geographischen Ort (100511) und geographisches Ausmaß (100512) des geographischen Gebiets (2) umfassen, das Folgendes umfasst
Zerteilen durch die zentrale Mess-Engine (10) des zu deckenden geographischen Gebiets (2) durch ein räumliches Gitter (1002) mit einstellbaren Gitterzellen (1003) mit definierbarer Größe (10033), wobei die Zellen (1003) dynamisch angepasst werden, indem auf Gebiete, die näher an einer Überschwemmung und/oder einem Fluss sind, eine höhere Messauflösung angewendet wird als auf Gebiete, die weiter entfernt sind, und wobei eine Gitterzelle (1003) als eine überschwemmte Gitterzelle oder eine nicht überschwemmte Gitterzelle durch die Gitterzellenmessungen erfasst wird,
Erfassen von Gitterzellen (1003), die als überschwemmt gemessen werden sollen, durch eine auf Machine-Learning basierende Engine mit der Machine-Learning-Struktur, die eine gitterzellenbasierte Überschwemmungsgebietabbildung als einen Fernabtastprozess über das definierte geographische Gebiet (2) bereitstellt, wobei durch eine digitale Höhenmodellierungsstruktur der Machine-Learning-basierten Engine eine gitterzellenbasierte Überschwemmungsgebietabbildung bereitgestellt wird, und wobei Gefälle- und Geländemerkmale des ausgewählten Gebiets von der digitalen Höhenmodellierungsstruktur mit einer adaptiven Messgenauigkeit aufgenommen werden, die auf der ausgewählten Gittergröße basiert,
Unterteilen des räumlichen Gitters (1002) in zellquadratische Gitter, Zuordnen zu jedem dieser Gitter einer eigenen Machine-Learning-Struktur mit einem Eingabe-Layer und einem Ausgabe-Layer und Eingeben von Messungen von Echtzeitabflüssen der stromaufwärtigen Einzugsgebiete oder von Hochwasserstandsmessungen für die Vorhersage einer maximalen Hochwasserüberflutung als Ausgabe der Machine-Learning-Struktur für eine Gitterzelle (1003), wobei die Anzahl von Eingaben in den Eingabe-Layer einer Machine-Learning-Struktur auf der Anzahl von Hydrographen innerhalb der jeweiligen Gitterzelle (1003) basiert, die eine Abfluss- oder Hochwassermesskurve bereitstellen, und wobei die Ausgabe des Ausgabe-Layers ein Überflutungsausmaß in jeder Gitterzelle (1003) angibt,
Messen durch Hochwassererfassungsvorrichtungen und/oder Hochwassersensoren (102) eines Auftretens eines Hochwasserereignisses (2) durch Messen von Überschwemmungen innerhalb der Gitterzellen (1003) des räumlichen Gitters (1002), wobei Hochwassermessparameter (1021) der Hochwassererfassungsvorrichtungen und/oder Hochwassersensoren (102) an die zentrale Mess-Engine (10) übertragen werden, und wobei basierend auf den übertragenen Hochwassermessparametern (1021) Gitterzellen (1003), die als überschwemmt gemessen werden, zu dem als betroffen gemessenen Gebiet (21) beitragen, während Gitterzellen, die als nicht überschwemmt gemessen werden, zu dem als nicht betroffen gemessenen Gebiet (22) beitragen;
Messen einer Hochwasserschwellenmessgröße, wobei die Hochwasserschwellenmessgröße (1032) aus einem Prozentsatz (23) des geographischen Gebiets (2) ausgewählt wird, der sich aus dem als betroffen gemessenen Gebiet (21) bezogen auf das gesamte geographische Gebiet (2) ergibt; und
Auslösen der adaptiven Schadensdeckungsstruktur (1041) zum Decken physischer Schäden oder Verluste (32), die dem gemessenen Auftreten des Hochwasserereignisses (4) zugeordnet sind, wobei das Auftreten physische Objekte (3), die sich in den Gitterzellen (10031) befinden, die als betroffen gemessen werden, messbar beeinträchtigt, wobei die adaptive Schadensdeckungsstruktur (1041) durch das Schadensdeckungssystem (104) basierend auf der Hochwasserschwellenmessgröße (1032), die die dynamische parametrische Hochwasserauswirkungsdeckung (1031) bereitstellt, angepasst wird.

2. Verfahren nach Anspruch 1, **dadurch gekennzeichnet, dass** die adaptive Schadensdeckungsstruktur (1041) nur ausgelöst wird, wenn die Hochwasserschwellenmessgröße (1032) als einen vordefinierten Hochwasserschwellenwert (1033) überschreitend gemessen wird.

3. Verfahren nach Anspruch 1, **dadurch gekennzeichnet, dass** die adaptive Schadensdeckungsstruktur (1041) ausgelöst wird, um eine Schadensdeckung (1031) bereitzustellen, die direkt von der gemessenen Hochwasserschwellenmessgröße (1032) abhängt.

4. Verfahren nach einem der Ansprüche 1 bis 3, **dadurch gekennzeichnet, dass** die adaptive Schadensdeckungsstruktur (1041) des Schadensdeckungssystems (104) durch Übertragen elektronischer Lenksignale von dem automatisch gelenkten elektronischen ersten und/oder zweiten Ressourcen-Pooling-System (1042/1043) ausgelöst wird, wobei die adaptive Schadensdeckungsstruktur (1041) von dem Schadensdeckungssystem (104) basierend auf der Hochwasserschwellenmessgröße (1032), die von den elektronischen Lenksignalen übertragen werden, angepasst wird.

5. Verfahren nach einem der Ansprüche 1 bis 3, **dadurch gekennzeichnet, dass** das Auslösen der adaptiven Schadensdeckungsstruktur (1041) zum Decken physischer Schäden oder Verluste (32), die dem gemessenen Auftreten des Hochwasserereignisses (4) zugeordnet sind, das Erzeugen einer parametrischen Deckung (1031) basierend auf der adaptiven Schadensdeckungsstruktur (1041) und Transferieren durch ein elektronisches Zahlungstransfermodul umfasst, basierend auf der erzeugten parametrischen Deckung (1031) von monetären Auszahlungsparameterwerten durch elektronischen Zahlungstransfer, um die physischen Schäden oder Verluste (32), die dem gemessenen Auftreten zugeordnet sind, zu decken.

6. Verfahren nach einem der Ansprüche 1 bis 5, **dadurch gekennzeichnet, dass** die Gitterzellen (1003) als zweidimensionale m x n-Blöcke (10033) definiert sind.

7. Verfahren nach Anspruch 6, **dadurch gekennzeichnet, dass** die zweidimensionalen m x n-Blöcke (1003) in etwa eine Größe (10033) von 8,72*10-5 Radian aufweisen.

8. Verfahren nach Anspruch 6, **dadurch gekennzeichnet, dass** das zweidimensionale Gitter (1002) zu 0,0005 eine Größe (10033) von 8,72*10-5 Radian aufweist.

9. Verfahren nach Anspruch 6, **dadurch gekennzeichnet, dass** die m x n-Blöcke (1003) in etwa eine Größe (10033) von 0,005*0,005 Grad aufweisen.

10. Verfahren nach einem der Ansprüche 1 bis 9, **dadurch gekennzeichnet, dass** das geographische Gebiet (2) vermessene Landschaft umfasst, die für ein Gebiet repräsentativ ist, das aus Trockenland (24) und Feuchtgebiet (25) besteht.

11. Verfahren nach einem der Ansprüche 1 bis 10, **dadurch gekennzeichnet, dass** das Auftreten des Hochwasserereignisses (4) unter Verwendung von Loopback-Signalisierung (1022) erfasst wird.

12. Verfahren nach einem der Ansprüche 1 bis 11, **dadurch gekennzeichnet, dass** die Gitterzellen (1003), die als überschwemmt (10031) gemessen werden, unter Verwendung mindestens einer künstlichen Intelligenz basierend auf Datenverarbeitungsstruktur und/oder einer Machine-Learning-basierten Datenverarbeitungsstruktur bestimmt werden.

13. Verfahren nach einem der Ansprüche 1 bis 12, **dadurch gekennzeichnet, dass** das betroffene Gebiet unter Verwendung mindestens teilweise luftgestützter und/oder weltraumgestützter optischer Messvorrichtungen (1023/1024) gemessen wird.

14. Verfahren nach einem der Ansprüche 1 bis 13, **gekennzeichnet durch** Erzeugen eines Prämienwerts basierend auf einer spezifischen Auswahl der parametrischen Hochwasserauswirkungsdeckung (1031).

15. Verfahren nach einem der Ansprüche 1 bis 14, **dadurch gekennzeichnet, dass** das Auslösen der adaptiven Schadensdeckungsstruktur (1041) zum Decken physischer Schäden oder Verluste (32), die dem gemessenen Auftreten des Hochwasserereignisses (4) zugeordnet sind, das Erzeugen einer parametrischen Deckung (1031) basierend auf einer Deckungsaktivierungssignalisierung oder elektronischen Auszahlungsfunktion (1046) und Transferieren durch ein elektronisches Zahlungstransfermodul umfasst, basierend auf der Ausgabe der Deckungsaktivierungssignalisierung oder elektronischen Auszahlungsfunktion (1046) einer monetären Auszahlung durch elektronischen Zahlungstransfer, um die physischen Schäden oder Verluste (32), die dem gemessenen Auftreten zugeordnet sind, zu decken.

16. Verfahren nach Anspruch 15, **dadurch gekennzeichnet, dass** die Deckungsaktivierungssignalisierung oder elektronische Auszahlungsfunktion (1046) eine lineare Auszahlungsfunktion (10461) und/oder eine schrittweise Auszahlungsfunktion (10462) und/oder eine auf Selbstbehalten basierende Auszahlungsfunktion (10463) umfasst.

17. Verfahren nach einem der Ansprüche 15 oder 16, **dadurch gekennzeichnet, dass** die Deckungsaktivierungssignalisierung oder elektronische Auszahlungsfunktion (1046) basierend auf Topographie und/oder Expositionsverteilung auswählbar ist.

18. Verfahren nach einem der Ansprüche 15 bis 17, **dadurch gekennzeichnet, dass** die Deckungsaktivierungssignalisierung oder elektronische Auszahlungsfunktion (1046) benutzerspezifisch definierbar ist.

19. Verfahren nach einem der Ansprüche 15 bis 18, **dadurch gekennzeichnet, dass** das geographische Gebiet (2) mindestens Teile umfasst, die als automatisch von der dynamischen parametrischen Hochwasserauswirkungsdeckung (1031) ausgenommen definierbar sind.

20. Hochwassermess- und Auslösungssystem (1) zum Auslösen einer dynamischen parametrischen Hochwasserauswirkungsdeckung für physische Objekte (3/31), die messbar durch ein Auftreten eines Hochwasserereignisses (4) beeinträchtigt sind, unter Verwendung einer adaptiven Schadensdeckungsstruktur (1031) eines elektronischen Schadenssignalisierungs- und/oder Schadensdeckungssystems (103), basierend auf physischen Hochwasserereignismessungen, wobei das Hochwassermess- und Auslösungssystem (1) eine zentrale Mess-Engine (10) mit einer vordefinierten Datenstruktur (1005) zum Aufnehmen eines zu deckenden geographischen Gebiets (2) umfasst, wobei die Datenstruktur (1005) mindestens definierbare Gebietsparameter (10041) umfasst, die geographischen Ort (100511) und geographisches Ausmaß (100512) des geographischen Gebiets (2) aufnehmen, das Folgendes umfasst:
dass die vordefinierte Datenstruktur (1005) Gitterparameter (10033) zum Zerteilen des abzudeckenden geografischen Gebiets (2) mittels des dynamischen Gitter-Splitters (1001) in ein räumliches Gitter (1002) mit variablen Gitterzellen (1003) mit automatisch anpassbarer Größe (10033) umfasst, wobei die Zellen (1003) dynamisch angepasst werden, indem Gebieten, die näher an einer Überschwemmung und/oder einem Fluss liegen, eine höhere Messauflösung zugewiesen wird als weiter entfernten Gebieten, und wobei eine Gitterzelle (1003) durch Gitterzellenmessungen als überflutete Gitterzelle oder als nicht überflutete Gitterzelle erfasst wird,
dass das Hochwassermess- und Auslösungssystem (1) eine auf Machine-Learning basierende Engine mit der Machine-Learning-Struktur zum Erfassen von Gitterzellen umfasst, die durch eine gitterzellenbasierte Überschwemmungsgebietabbildung als ein Fernabtastprozess über das definierte geographische Gebiet (2) als überschwemmt gemessen werden sollen, wobei durch eine digitale Höhenmodellierungsstruktur der Machine-Learning-basierten Engine eine gitterzellenbasierte Überschwemmungsgebietabbildung bereitgestellt wird, und wobei Gefälle- und Geländemerkmale des ausgewählten Gebiets von der digitalen Höhenmodellierungsstruktur mit einer adaptiven Messgenauigkeit aufgenommen werden, die auf der ausgewählten Gittergröße basiert,
dass das räumliche Gitter (1002) in zellquadratische Gitter unterteilt wird, wobei jedes der Gitter eine eigene Machine-Learning-Struktur aufweist, die einem Eingabe- und einem Ausgabe-Layer zugeordnet ist, wobei für eine Vorhersage einer maximalen Hochwasserüberflutung als Ausgabe der Machine-Learning-Struktur für eine Gitterzelle (1003) Messungen von Echtzeitabflüssen der stromaufwärtigen Einzugsgebiete oder Hochwasserstandsmessungen eingegeben werden, wobei die Anzahl von Eingaben zu dem Eingabe-Layer einer Maschinen-Learning-Struktur auf der Anzahl von Hydrographen innerhalb der jeweiligen Gitterzelle (1003) basiert, die eine Abfluss- oder Hochwassermesskurve bereitstellen, und wobei die Ausgabe des Ausgabe-Layers eine Überschwemmungsausmaß in jeder Gitterzelle (1003) angibt,
dass das Hochwassermess- und Auslösungssystem (1) Hochwassererfassungsvorrichtungen und/oder Hochwassersensoren (102) zum Messen eines Auftretens eines Hochwasserereignisses (4) durch Messen von Überschwemmungen innerhalb von Gitterzellen (1003) des räumlichen Gitters (1002) umfasst, wobei die Hochwassermessparameter (1021) der Hochwassererfassungsvorrichtungen und/oder Hochwassersensoren (102) an die zentrale Mess-Engine (10) übertragen werden, und wobei basierend auf den übertragenen Hochwassermessparametern (1021) Gitterzellen (1003), die als überschwemmt gemessen werden, zu dem als betroffen gemessenen Gebiet (21) beitragen, während Gitterzellen, die als nicht überschwemmt gemessen werden, nicht zu dem als betroffen gemessenen Gebiet (22) beitragen;
dass die zentrale Mess-Engine (10) eine Hochwasserschwellenmessgröße (1032) umfasst, wobei die Hochwasserschwellenmessgröße (1032) aus einem Prozentsatz (23) des geographischen Gebiets (2) ausgewählt wird, der sich aus dem Gebiet (2), das von dem als betroffen gemessenen Gebiet (21) bezogen auf das gesamte geographische Gebiet (2) ergibt; und
dass die zentrale Mess-Engine (10) einen elektronischen Hochwasserauslöser (103) zum Auslösen der adaptiven Schadensdeckungsstruktur (1041) umfasst, die physische Schäden oder Verluste, die dem gemessenen Auftreten des Hochwasserereignisses (4) zugeordnet sind, deckt, wobei das Auftreten messbar physische Objekte (3/31) beeinträchtigt, die sich in den Gitterzellen (1011) befinden, die als betroffen (10111) gemessen werden, wobei die adaptive Schadensdeckungsstruktur (1041) von dem Schadensdeckungssystems (104) basierend auf der Hochwasserschwellenmessgröße (1032), die die dynamische parametrische Hochwasserauswirkungsdeckung (1031) bereitstellt, angepasst wird.

## Revendications

1. Procédé automatisé de fourniture d'une couverture paramétrique dynamique des impacts d'inondation (1031) pour des objets physiques (3/31) mesurablement impactés par une survenue (41/42/43) d'un événement d'inondation (4), en utilisant une structure de couverture des dommages adaptative (1041) d'un système de couverture des dommages (104) basé sur des mesures physiques de l'événement d'inondation, dans lequel un moteur de mesure central (10) capture une zone géographique (2) à couvrir par une structure de données prédéfinie (1005), la structure de données (1005) comprenant au moins des paramètres de zone définissables (10051) capturant la localisation géographique (100511) et l'étendue géographique (100512) de ladite zone géographique (2), comprenant :
la division, par le moteur de mesure central (10), de la zone géographique (2) à couvrir par une grille spatiale (1002) avec des cellules de grille ajustables (1003) de taille définissable (10033), dans lequel les cellules (1003) sont adaptées dynamiquement en appliquant une résolution de mesure plus élevée aux zones plus proches d'une inondation et/ou d'une rivière qu'aux zones plus éloignées et dans lequel une cellule de grille (1003) est détectée comme étant une cellule de grille inondée ou une cellule de grille non inondée par les mesures de cellule de grille,
la détection des cellules de grille (1003) à mesurer comme inondées par un moteur d'apprentissage automatique, la structure d'apprentissage automatique fournissant une cartographie des zones inondables basée sur cellules de grille, en tant que processus de télédétection, sur la zone géographique définie (2), dans lequel le moteur d'apprentissage automatique fournit une cartographie des zones inondables basée sur cellules de grille par une structure de modélisation d'élévation numérique et dans lequel les caractéristiques de pente et de terrain de la zone sélectionnée sont capturées par la structure de modélisation d'élévation numérique avec une précision de mesure adaptative basée sur la taille de la grille sélectionnée,
la subdivision de la grille spatiale (1002) en cellules de grilles carrées, associant chacune des grilles à sa propre structure d'apprentissage automatique dotée d'une couche d'entrée et d'une couche de sortie, et l'entrée des mesures de débits en temps réel des bassins versants en amont ou des mesures du niveau d'inondation sont utilisées, pour prédire une inondation maximale comme sortie de la structure d'apprentissage automatique pour une grille de cellule (1003), dans lequel le nombre d'entrées de la couche d'entrée d'une structure d'apprentissage automatique est basé sur le nombre d'hydrogrammes présents dans ladite cellule de grille (1003), fournissant ainsi une courbe de mesure de débit ou d'inondation et dans lequel la sortie de la couche de sortie fournit une étendue d'inondation dans chaque cellule de grille (1003),
la mesure d'une survenue d'un événement d'inondation (2) par des dispositifs de détection d'inondation et/ou des capteurs d'inondation (102) en mesurant les inondations dans les cellules de grille (1003) de la grille spatiale (1002), dans lequel les paramètres de mesure d'inondation (1021) des dispositifs de détection d'inondation et/ou des capteurs d'inondation (102) sont transmis au moteur de mesure central (10) et dans lequel, sur la base des paramètres de mesure d'inondations transmis (1021), les cellules de grille (1003) mesurées comme inondées contribuent à la zone mesurée comme affectée (21), tandis que les cellules de grilles mesurées comme non inondées contribuent à la zone mesurée comme non affectée (22) ;
la mesure d'un seuil d'inondation, dans lequel le seuil d'inondation mesuré (1032) est sélectionné à partir d'un pourcentage (23) de la zone géographique (2) donné par la zone mesurée comme affectée (21) par rapport à la zone géographique totale (2) ; et
le déclenchement de la structure de couverture des dommages adaptative (1041) pour couvrir les dommages ou pertes matériels (32) associés à la survenue mesurée de l'événement d'inondation (4), la survenue impactant de manière mesurable les objets physiques (3) situés dans les cellules de grilles (10031) mesurées comme affectées, dans lequel la structure de couverture des dommages adaptative (1041) est adaptée par le système de couverture des dommages (104) sur la base du seuil d'inondation mesuré (1032), fournissant ainsi la couverture paramétrique dynamique des impacts d'inondation (1031).

2. Procédé selon la revendication 1, **caractérisé en ce que** la structure de couverture des dommages adaptative (1041) n'est déclenchée que si le seuil d'inondation mesuré (1032) est mesuré comme dépassant une valeur de seuil d'inondation prédéfinie (1033).

3. Procédé selon la revendication 1, **caractérisé en ce que** la structure de couverture des dommages adaptative (1041) est déclenchée pour fournir une couverture des dommages (1031) directement dépendante du seuil d'inondation mesuré (1032).

4. Procédé selon une des revendications 1 à 3, **caractérisé en ce que** la structure de couverture des dommages adaptative (1041) du système de couverture des dommages (104) est déclenchée par la transmission de signaux de pilotage électroniques au premier et/ou deuxième système de mise en commun des ressources (1042/1043), dans lequel la structure de couverture des dommages adaptative (1041) est adaptée par le système de couverture des dommages (104) sur la base du seuil d'inondation mesuré (1032) transmis par les signaux de pilotage électroniques.

5. Procédé selon une des revendications 1 à 3, **caractérisé en ce que** le déclenchement de la structure de couverture des dommages adaptative (1041) pour couvrir les dommages physiques ou pertes (32) associés à la survenance mesurée de l'événement d'inondation (4) comprend la génération d'une couverture paramétrique (1031) basée sur la structure de couverture des dommages adaptative (1041) et le transfert, par un module de virement électronique, sur la base de la couverture paramétrique générée (1031), des valeurs de paramètres de versement monétaire par virement électronique pour couvrir les dommages physiques ou les pertes (32) associés à la survenue mesuré.

6. Procédé selon une des revendications 1 à 5, **caractérisé en ce que** les cellules de grilles (1003) sont définies comme des blocs bidimensionnels de taille m x n (10033).

7. Procédé selon la revendication 6, **caractérisé en ce que** les blocs bidimensionnels m x n (1003) ont une taille d'environ 8,72 * 10-5 radians (10033).

8. Procédé selon la revendication 6, **caractérisé en ce que** la grille bidimensionnelle (1002) de 0,0005 a une taille de 8,72 * 10-5 radians (10033).

9. Procédé selon la revendication 6, **caractérisé en ce que** les blocs de dimensions m × n (1003) ont une taille d'environ 0,005 * 0,005 degré (10033).

10. Procédé selon une des revendications 1 à 9, **caractérisé en ce que** la zone géographique (2) comprend un paysage étudié représentatif des surfaces couvertes de terres sèches (24) et de zones humides (25).

11. Procédé selon une des revendications 1 à 10, **caractérisé en ce que** la survenue d'une crue (4) est détectée en utilisant la signalisation en boucle (1022).

12. Procédé selon une des revendications 1 à 11, **caractérisé en ce que** les cellules de grilles (1003) mesurées comme inondées (10031) sont déterminées en utilisant au moins une structure de traitement de données basée sur l'intelligence artificielle et/ou une structure de traitement de données basée sur l'apprentissage automatique.

13. Procédé selon une des revendications 1 à 12, **caractérisé en ce que** la zone affectée est mesurée en utilisant des appareils de mesure optiques, au moins partiellement aéroportés et/ou spatiaux (1023/1024).

14. Procédé selon une des revendications 1 à 13, **caractérisé par** la génération d'une valeur de prime basée sur une sélection spécifique de la couverture paramétrique des impacts d'inondations (1031).

15. Procédé selon une des revendications 1 à 14, **caractérisé en ce que** le déclenchement de la structure de couverture des dommages adaptative (1041) pour la couverture des dommages physiques ou des pertes (32) associés à la survenance mesurée de l'événement d'inondation (4) comprend la génération d'une couverture paramétrique (1031) basée sur une signalisation d'activation de couverture ou une fonction de versement électronique (1046) et le transfert, par un module de virement électronique, sur la base de la sortie de la signalisation d'activation de couverture ou de la fonction de versement électronique (1046), d'un versement monétaire par virement électronique pour couvrir les dommages physiques ou les pertes (32) associés à la survenance mesurée.

16. Procédé selon la revendication 15, **caractérisé en ce que** la signalisation d'activation de couverture ou la fonction de versement électronique (1046) comprend une fonction de versement linéaire (10461) et/ou une fonction de versement échelonné (10462) et/ou une fonction de versement basée sur des franchises (10463).

17. Procédé selon une des revendications 15 ou 16, **caractérisé en ce que** la fonction de signalisation d'activation de couverture ou de versement électronique (1046) est sélectionnable sur la base de la topographie et/ou la distribution d'exposition.

18. Procédé selon une des revendications 15 à 17, **caractérisé en ce que** la fonction de signalisation d'activation de couverture ou de versement électronique (1046) est paramétrable par l'utilisateur.

19. Procédé selon une des revendications 15 à 18, **caractérisé en ce que** la zone géographique (2) comprend au moins des parties pouvant être définies comme automatiquement exclues de la couverture paramétrique dynamique des impacts d'inondations (1031).

20. Système de mesure des inondations et de déclenchement (1) pour déclencher une couverture dynamique paramétrique des impacts d'inondations pour des objets physiques (3/31) mesurablement impactés par une survenue d'un événement d'inondation (4), en utilisant une structure de couverture des dommages adaptative (1031) d'un système de signalisation des dommages et/ou d'un système de couverture des dommages électronique (103) basé sur des mesures physiques d'événement d'inondation, dans lequel le système de mesure des inondations et de déclenchement (1) comprend un moteur de mesure central (10) avec une structure de données prédéfinie (1005) pour capturer une zone géographique (2) à couvrir, la structure de données (1005) comprenant au moins des paramètres de zone définissables (10041) capturant la localisation géographique (100511) et l'étendue géographique (100512) de ladite zone géographique (2), comprenant :
cette structure de données prédéfinie (1005) comprend des paramètres de grille (10033) pour diviser la zone géographique (2), à couvrir par une grille spatiale (1002) avec des cellules de grille ajustables (1003) de taille automatiquement adaptable (10033) au moyen d'un diviseur de grille dynamique (1001), dans lequel les cellules (1003) sont adaptées dynamiquement en appliquant une résolution de mesure plus élevée aux zones plus proches d'une inondation et/ou d'une rivière qu'aux zones plus éloignées et dans lequel une cellule de grille (1003) est détectée comme étant une cellule de grille inondée ou une cellule de grille non inondée par les mesures de cellule de grille,
le système de mesure des inondations et de déclenchement (1) comprend un moteur d'apprentissage automatique doté d'une structure d'apprentissage automatique pour détecter les cellules de grilles à mesurer comme inondées par une cartographie des zones inondables basée sur une grille, en tant que processus de télédétection sur la zone géographique définie (2), dans lequel le moteur d'apprentissage automatique fournit une cartographie des zones inondables basée sur cellules de grille par une structure de modélisation d'élévation numérique et dans lequel les caractéristiques de pente et de terrain de la zone sélectionnée sont capturées par la structure de modélisation d'élévation numérique avec une précision de mesure adaptative basée sur la taille de la grille sélectionnée,
la grille spatiale (1002) est subdivisée en cellules carrées, chacune des grilles ayant sa propre structure d'apprentissage automatique dotée d'une couche d'entrée et d'une couche de sortie, dans lequel des mesures de débits en temps réel des bassins versants en amont ou des mesures du niveau d'inondation sont entrées, pour prédire une inondation maximale comme sortie de la structure d'apprentissage automatique pour une grille de cellule (1003), dans lequel le nombre d'entrées de la couche d'entrée d'une structure d'apprentissage automatique est basée sur le nombre d'hydrogrammes présents dans ladite cellule de grille (1003), fournissant ainsi une courbe de mesure de débit ou d'inondation et dans lequel la sortie de la couche de sortie fournit une étendue d'inondation dans chaque cellule de grille (1003),
le système de mesure et de déclenchement des crues (1) comprend des dispositifs de détection des crues et/ou des capteurs d'inondation (102) pour mesurer une survenue d'un événement d'inondation (4) en mesurant les inondations dans les cellules de grille (1003) de la grille spatiale (1002), dans lequel les paramètres de mesure d'inondation (1021) des dispositifs de détection d'inondation et/ou des capteurs d'inondation (102) sont transmis au moteur de mesure central (10) et dans lequel, sur la base des paramètres de mesure d'inondations transmis (1021), les cellules de grille (1003) mesurées comme inondées contribuent à la zone mesurée comme affectée (21), tandis que les cellules de grilles mesurées comme non inondées ne contribuent pas à la zone mesurée comme affectée (22) ;
le moteur de mesure central (10) comprend un seuil d'inondation mesuré (1032), dans lequel le seuil d'inondation mesuré (1032) est sélectionné parmi un pourcentage (23) de la zone géographique (2), déterminé par la zone (21) mesurée comme affectée par rapport à la surface géographique totale (2), et
le moteur de mesure central (10) comprend un déclencheur électronique d'inondation (103) pour déclencher la structure de couverture des dommages adaptative (1041) pour couvrir les dommages ou pertes matériels associés à la survenue mesurée de l'événement d'inondation (4), la survenue impactant de manière mesurable les objets physiques (3/31) situés dans les cellules de grilles (1011) mesurées comme affectées (10111), dans lequel la structure de couverture des dommages adaptative (1041) est adaptée par le système de couverture des dommages (104) sur la base du seuil d'inondation mesuré (1032), fournissant ainsi la couverture paramétrique dynamique des impacts d'inondation (1031).
